# EUROPEAN PATENT APPLICATION

(11) **EP 3 763 974 A1**
(43) Date of publication of application: **13.01.2021**
(21) Application number: 19764020.4
(22) Date of filing: 27.02.2019
(51) Int. Cl.: F16J 15/3256, F16C 19/16, F16C 33/78, F16J 15/3232, F16J 15/3284

(54) **SEALING DEVICE AND SEALING STRUCTURE**

(30) Priority: 08.03.2018 JP 2018041976; 23.08.2018 JP 2018156092
(71) Applicant: NOK Corporation, Minato-ku, Tokyo 105-8585 (JP)
(72) Inventor: ARAI, Hidenori, Fukushima-shi, Fukushima 960-1193 (JP); HANADA, Yuki, Fujisawa-shi, Kanagawa 251-0042 (JP); SAKANO, Yuya, Fukushima-shi, Fukushima 960-1193 (JP)
(74) Representative: Global IP Europe Patentanwaltskanzlei
(86) International application number: PCT/JP2019/007515
(87) International publication number: WO 2019/172036

(57) **Abstract**

A sealing device located between an inner member and an outer member that rotate relative to each other, for sealing a gap between the inner member and the outer member, includes a first sealing member that is to be mounted on the outer member and a second sealing member that is to be mounted on the inner member. Multiple water-discharging protrusions are supported by at least one of the first sealing member and the second sealing member. The multiple water-discharging protrusions protrudes in a space located between an annular part of the first sealing member and a flange part of the second sealing member and are arranged in a circumferential direction. Each water-discharging protrusion includes an inclined side surface intersecting at an acute angle with a rotational direction in which at least one of the inner member and the outer member rotates.

## Description

### TECHNICAL FIELD

The present invention relates to sealing devices and to sealing structures.

### BACKGROUND ART

Rolling bearings, such as ball bearings, are well known, and are used, for example, in hubs of automotive vehicles. A sealing device for sealing the inside of a rolling bearing is disclosed in Patent Document 1. The sealing device includes an annular body fixed to the outer race of the rolling bearing, a radial lip (grease lip) extending radially inward from the annular body, and two side lips (axial lips) extending laterally from the annular body. The radial lip is in contact with the outer peripheral surface of the inner race of the bearing or the outer peripheral surface of a part fixed to the inner race, and has a function of sealing lubricant (grease) inside the bearing, whereas the two side lips are in contact with a flange of the inner race, and have a function of sealing, so that foreign matter, such as water and dust, does not enter into the inside of the bearing from the outside.

### BACKGROUND DOCUMENTS

### Patent Document

Patent Document 1: JP-B-3991200

### SUMMARY OF THE INVENTION

For this type of sealing device, there is demand to improve the function of protecting against water (including muddy water or salt water) from entering the inside of the sealed object (e.g., bearing) if the sealing device is used in an environment with a lot of water. It is also desirable for water to be discharged rapidly even if water does enter the sealing device.

Accordingly, the present invention provides a sealing device and a sealing structure that have superior ability to discharge water and superior ability to protect the sealed object from water.

A sealing device according to an aspect of the present invention is used for a rolling bearing including an inner member and an outer member that rotate relative to each other, the sealing device located between the inner member and the outer member for sealing a gap between the inner member and the outer member, the sealing device including: a first sealing member that is to be mounted on the outer member, the first sealing member including an annular part expanding radially inward toward the inner member; and a second sealing member that is to be mounted on the inner member, the second sealing member including a flange part expanding radially outward and facing the annular part of the first sealing member, multiple water-discharging protrusions being supported by at least one of the first sealing member and the second sealing member, the multiple water-discharging protrusions protruding in a space located between the annular part of the first sealing member and the flange part of the second sealing member and being arranged in a circumferential direction, each water-discharging protrusion including an inclined side surface intersecting at an acute angle with a rotational direction in which at least one of the inner member and the outer member rotates.

In this sealing device, water may enter the space between the annular part of the first sealing member and the flange part of the second sealing member. However, multiple water-discharging protrusions protrude in the space, and each water-discharging protrusion has an inclined side surface that intersects at an acute angle with the rotational direction in which at least one of the inner member and the outer member rotates. Therefore, together with relative rotation of the inner member and the outer member, the water in the space flows in the opposite direction along the inclined side surface and is quickly discharged from the space. For this reason, the sealing device has a superior ability to protect the sealed object against water. Furthermore, since the multiple water-discharging protrusions protrude into the space between the annular part of the first sealing member and the flange part of the second sealing member, it is not necessary to enlarge the sealing device for the water-discharging protrusions.

A sealing structure according to an aspect of the present invention includes: an inner member including a cylindrical part and a flange expanding radially outward from the cylindrical part; an outer member rotating relative to the inner member; and a sealing member mounted on the outer member, the sealing member including an annular part expanding radially inward toward the cylindrical part of the inner member and facing the flange of the inner member, multiple water-discharging protrusions being supported by at least one of the inner member and the sealing member, the multiple water-discharging protrusions protruding in a space located between the annular part of the sealing member and the flange of the inner member and being arranged in a circumferential direction, each water-discharging protrusion including an inclined side surface intersecting at an acute angle with a rotational direction in which at least one of the inner member and the outer member rotates.

In this sealing structure, water may enter the space between the annular part of the sealing member and the flange of the inner member. However, multiple water-discharging protrusions protrude in the space, and each water-discharging protrusion has an inclined side surface that intersects at an acute angle with the rotational direction in which at least one of the inner member and the outer member rotates. Therefore, accompanying relative rotation of the inner member and the outer member, the water in the space flows in the opposite direction along the inclined side surface and is quickly discharged from the space. For this reason, the sealing structure has a superior ability to protect the sealed object against water. Furthermore, since the multiple water-discharging protrusions protrude into the space between the annular part of the sealing member and the flange of the inner member, it is not necessary to enlarge the sealing structure for the water-discharging protrusions.

### BRIEF DESCRIPTION OF THE DRAWINGS

Fig. 1 is a partial cross-sectional view of an example of a rolling bearing in which a sealing device according to any one of the embodiments of the present invention is used;
Fig. 2 is a partial cross-sectional view of a sealing device according to a first embodiment of the present invention;
Fig. 3 is a partial perspective view showing a part of the sealing device according to the first embodiment in cutaway;
Fig. 4 is a partial perspective view showing a part of a first sealing member of the sealing device according to the first embodiment in cutaway;
Fig. 5 is a partial perspective view showing a part of a second sealing member of the sealing device according to the first embodiment in cutaway;
Fig. 6 is a perspective view showing the second sealing member, particularly water-discharging protrusions, of the sealing device according to the first embodiment;
Fig. 7 is a perspective view showing a second sealing member, particularly water-discharging protrusions, of a sealing device according to a modification of the first embodiment;
Fig. 8 is a partial cross-sectional view of a sealing device according to another modification of the first embodiment;
Fig. 9 is a partial cross-sectional view of a sealing device according to another modification of the first embodiment;
Fig. 10 is a partial cross-sectional view of a sealing device according to another modification of the first embodiment;
Fig. 11 is a partial perspective view showing a part of a sealing device according to still another modification of the first embodiment in cutaway;
Fig. 12 is a partial perspective view showing a part of a second sealing member of the sealing device of Fig. 11 in cutaway;
Fig. 13 is a partial cross-sectional view of the sealing device of Fig. 11;
Fig. 14 is a partial cross-sectional view of a modification of the sealing device of Fig. 11;
Fig. 15 is a partial cross-sectional view of a sealing device according to still another modification of the first embodiment;
Fig. 16 is a partial perspective view showing a part of the sealing device of Fig. 15 in cutaway;
Fig. 17 is a partial cross-sectional view of a sealing device according to still another modification of the first embodiment;
Fig. 18 is a partial perspective view showing a part of the second sealing member of the sealing device of Fig. 17 in cutaway;
Fig. 19 is a front view of a second sealing member of the sealing device of Fig. 17;
Fig. 20 is a cross-sectional view taken along line XX-XX in Fig. 19;
Fig. 21 is a view showing advantages at the time of rotation of the second sealing member of the sealing device of Fig. 17;
Fig. 22 is a view showing advantages when rotation of the second sealing member of the sealing device of Fig. 17 is stopped;
Fig. 23 is a cross-sectional view of a sealing device according to a modification of the modification of Fig. 17;
Fig. 24 is a cross-sectional view of a sealing device according to another modification of the modification of Fig. 17;
Fig. 25 is a partial perspective view showing a part of the second sealing member according to another modification in cutaway;
Fig. 26 is a perspective view showing the second sealing member of Fig. 25, particularly the water-discharging protrusions;
Fig. 27 is a partial perspective view showing a part of the second sealing member according to still another modification in cutaway;
Fig. 28 is a perspective view showing the second sealing member of Fig. 27, particularly the water-discharging protrusions;
Fig. 29 is a schematic view showing an apparatus used in a test for confirming a water discharge effect with respect to the first embodiment and its modification;
Fig. 30 is a graph showing the results of the test;
Fig. 31 is a partial cross-sectional view of a sealing structure according to a second embodiment of the present invention;
Fig. 32 is a partial cross-sectional view of a sealing structure according to a modification of the second embodiment;
Fig. 33 is a partial cross-sectional view of a sealing device according to a modification of the first embodiment;
Fig. 34 is a partial perspective view showing a part of a first sealing member of the modification of Fig. 33 in cutaway;
Fig. 35 is a partial perspective view showing a part of a second sealing member of a modification of the modification of Fig. 33; and
Fig. 36 is a partial cross-sectional view of a sealing structure according to a modification of the modification of Fig. 32.

### DESCRIPTION OF EMBODIMENTS

Hereinafter, with reference to the accompanying drawings, multiple embodiments according to the present invention will be described.

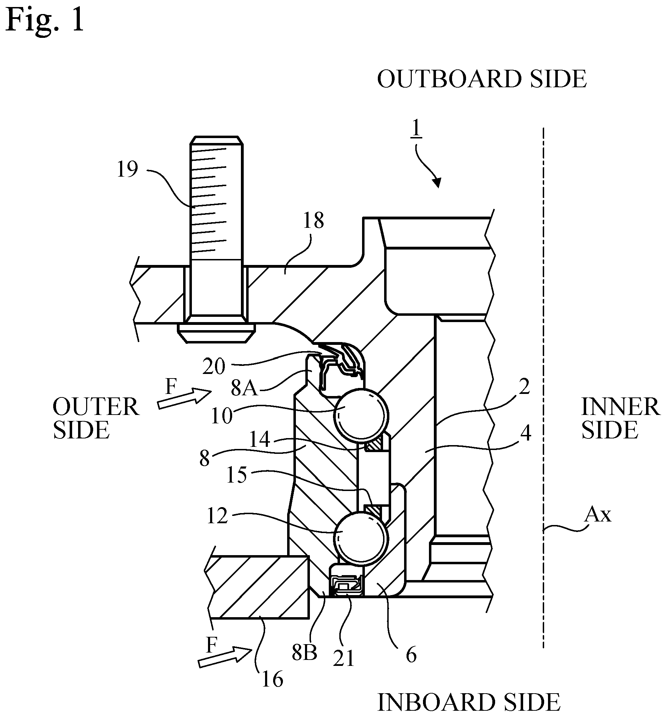

Fig. 1 shows a hub bearing for an automotive vehicle, which is an example of a rolling bearing, in which a sealing device according to any one of embodiments of the present invention is used. However, the use of the present invention is not limited to hub bearings, and the present invention can also be applied to other rolling bearings. In the following description, the hub bearing is a ball bearing. However, the use of the present invention is not limited to ball bearings, and the present invention can also be applied to other rolling bearings, such as roller bearings and needle bearings, having other types of rolling elements. The present invention is also applicable to rolling bearings used in machines other than automotive vehicles.

The hub bearing 1 includes a hub (inner member) 4 having a hole 2 into which a spindle (not shown) is inserted, an inner race (inner member) 6 attached to the hub 4, an outer race (outer member) 8 located outside of the hub 4 and the inner race 6, a plurality of balls 10 arranged in a row between the hub 4 and the outer race 8, a plurality of balls 12 arranged in a row between the inner race 6 and the outer race 8, and a plurality of retainers 14 and 15 for retaining the balls in place.

Whereas the outer race 8 is stationary, the hub 4 and the inner race 6 rotate as the spindle rotates.

The common central axis Ax of the spindle and hub bearing 1 extends in the vertical direction in Fig. 1. In Fig. 1, only the left part with respect to the central axis Ax is shown. Although not shown in detail, the upper side of Fig. 1 is the outer side (outboard side) of the automotive vehicle on which the wheels are arranged, whereas the lower side is the inner side (inboard side) on which the differential gears are arranged. The outer side and the inner side shown in Fig. 1 mean the outer side and the inner side in radial directions, respectively.

The outer race 8 of the hub bearing 1 is fixed to the hub knuckle 16. The hub 4 has an outboard side flange 18 extending further outward in radial directions than the outer race 8. A wheel can be attached to the outboard side flange 18 by hub bolts 19.

A sealing device 20 that seals the gap between the outer race 8 and the hub 4 is located near the end of the outer race 8 on the outboard side, and inside the end of the outer race 8 on the inboard side. Another sealing device 21 that seals the gap between the outer race 8 and the inner race 6 is located inside the end of the inner side of the outer race 8. The function of the sealing devices 20 and 21 prevents the grease, that is, the lubricant, from flowing out from the inside of the hub bearing 1 and prevents foreign matter (water (including muddy water or salt water) from entering the inside of the hub bearing 1 from the outside. In Fig. 1, each arrow F indicates an example of the direction of foreign matter flow from the outside.

The sealing device 20 is located between the rotating hub 4 and the cylindrical end portion 8A on the outboard side of the stationary outer race 8 of the hub bearing 1 to seal the gap between the hub 4 and the outer race 8. The sealing device 21 is located between the rotating inner race 6 and the end portion 8B on the inboard side of the outer race 8 of the hub bearing 1 to seal the gap between the inner race 6 and the outer race 8.

### FIRST EMBODIMENT

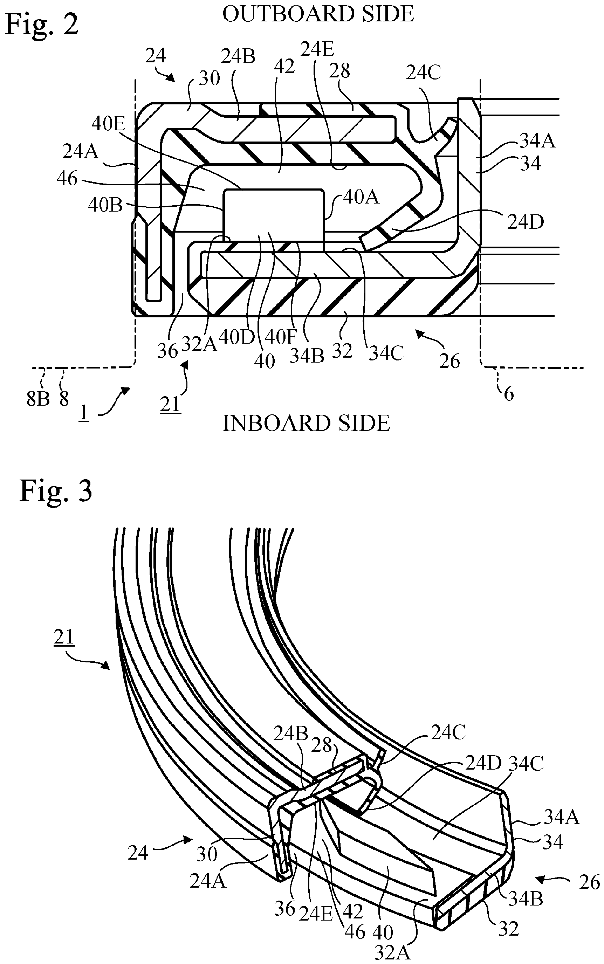

As shown in Fig. 2, the sealing device 21 is located in a gap between the end portion 8B on the inboard side of the outer race 8 of the hub bearing 1 and the inner race 6 of the hub bearing 1. Although the sealing device 21 has an annular shape, only the left part is shown in Fig. 2.

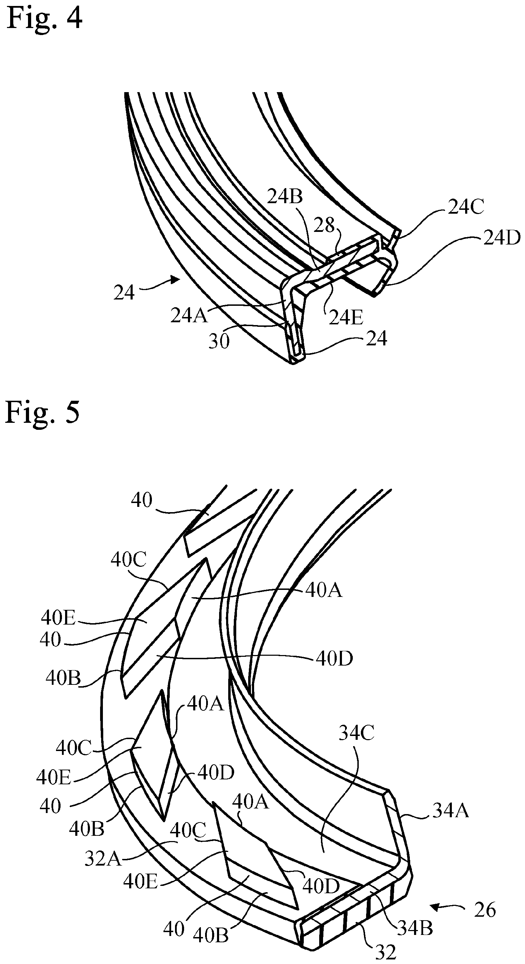

Fig. 3 is a partial perspective view showing a part of the sealing device 21 in cutaway. Fig. 4 is a partial perspective view showing a part of a first sealing member 24 that is a part of the sealing device 21 in cutaway. Fig. 5 is a partial perspective view showing a part of a second sealing member 26 that is a part of the sealing device 21 in cutaway. As is apparent from Figs. 2 to 5, the sealing device 22 has a composite structure including a first sealing member 24 and a second sealing member 26.

The first sealing member 24 is a stationary sealing member that is attached to the outer race 8 and does not rotate. The first sealing member 24 is of a composite structure having an elastic ring 28 and a rigid ring 30. The elastic ring 28 is made of an elastic material such as an elastomer. The rigid ring 30 is made of a rigid material such as metal, and reinforces the elastic ring 28. The rigid ring 30 has a substantially L-shaped cross-sectional shape. A part of the rigid ring 30 is embedded in the elastic ring 28 and is in close contact with the elastic ring 28.

The first sealing member 24 has a cylindrical part 24A, an annular part 24B, and lips 24C and 24D. The cylindrical part 24A constitutes a mounted part that is mounted on the outer race 8. Specifically, the cylindrical part 24A is engaged by interference fit (that is, is press-fitted) into the end portion 8B of the outer race 8. The annular part 24B, which has an annular shape, is located radially inside the cylindrical part 24A, and expands radially inward toward the inner race 6. The cylindrical part 24A and the annular part 24B are formed of the rigid ring 30 and the elastic ring 28.

The lips 24C and 24D extend from the inner end of the annular part 24B toward the second sealing member 26, and the distal ends of the lips 24C and 24D are in contact with the second sealing member 26. The lips 24C and 24D are formed of the elastic ring 28.

The second sealing member 26 can also be called a slinger, that is, a rotational sealing member. The second sealing member 26 is mounted on the inner race 6, and when the inner race 6 rotates, the second sealing member 26 rotates together with the inner race 6 and deflects foreign matter that was splashed and comes from the outside.

In this embodiment, the second sealing member 26 is also of a composite structure having an elastic ring 32 and a rigid ring 34. The rigid ring 34 is made of a rigid material such as a metal.

The rigid ring 34 has a substantially L-shaped cross-sectional shape. Specifically, the rigid ring 34 includes a cylindrical sleeve part 34A and an annular flange part 34B extending radially outward from the sleeve part 34A. The sleeve part 34A constitutes a mounted part that is mounted on the inner race 6. Specifically, an end portion of the inner race 6 is engaged by interference fit (that is, is press-fitted) into the sleeve part 34A.

The flange part 34B is located radially outside the sleeve part 34A, expands radially outward, and faces the annular part 24B of the first sealing member 24. In this embodiment, the flange part 34B is a flat plate and lies on a plane perpendicular to the axis of the sleeve part 34A. In this embodiment, the surface 34C of the flange part 34B of the second sealing member 26, which faces the annular part 24B, is parallel to the surface 24E of the annular part 24B of the first sealing member 24, which faces the flange part 34B.

The elastic ring 32 is in close contact with the flange part 34B of the rigid ring 34. In this embodiment, the elastic ring 32 is provided for measuring the rotation speed of the inner race 6. Specifically, the elastic ring 32 is formed of an elastomer material containing magnetic metal powder and ceramic powder, and has a large number of S poles and N poles by the magnetic metal powder. In the elastic ring 32, a large number of S poles and N poles are alternately arranged at equiangular intervals in the circumferential direction. The rotation angle of the elastic ring 32 can be measured by a magnetic rotary encoder (not shown). Since the material of the elastic ring 32 contains metal powder, it has a higher hardness than that of normal elastomer materials and is not easily damaged by foreign matter.

The lip 24C of the first sealing member 24 is a radial lip (grease lip) extending radially inward from the inner end of the annular part 24B. The radial lip 24C extends toward the sleeve part 34A of the second sealing member 26, and the distal end of the radial lip 24C is in contact with the sleeve part 34A. The radial lip 24C extends radially inward and toward the outboard side, and plays a main role for preventing the lubricant from flowing out from the inside of the hub bearing 1.

The lip 24D is an axial lip (side lip) extending laterally from the inner end of the annular part 24B. The distal end of the axial lip 24D extends radially outward and toward the inboard side, and is in contact with the flange part 34B of the second sealing member 26. The axial lip 24D plays a main role to prevent foreign matter from flowing into the hub bearing 1 from the outside.

Whereas the first sealing member 24 is attached to the stationary outer race 8, the inner race 6 and the second sealing member 26 rotate, so that the lips 24C and 24D slide on the sleeve part 34A and the flange part 34 of the second sealing member 26, respectively.

As shown in Fig. 2, an annular clearance 36 is provided between the distal end on the inboard side of the cylindrical part 24A of the first sealing member 24 and the outer end edge of the second sealing member 26. Through the clearance 36, foreign matter may enter a space 42 between the annular part 24B of the first sealing member 24 and the flange part 34B of the second sealing member 26 (space between the surface 24E of the annular part 24B and the surface 34C of the flange part 34B), more specifically, a space 46 between the annular part 24B of the first sealing member 24 and the elastic ring 32 of the second sealing member 26 (space between the surface 24E of the annular part 24B and the surface 32A of the elastic ring 32). Conversely, foreign matter in the spaces 42 and 46 can be discharged through the clearance 36.

Multiple water-discharging protrusions 40, which protrude toward the annular part 24B of the first sealing member 24, are supported by the second sealing member 26. The water-discharging protrusions 40 have the same shape and the same size, and are arranged at equiangular intervals in the circumferential direction. The water-discharging protrusions 40 protrude into the space 46.

In this embodiment, the multiple water-discharging protrusions 40 are integrally mounted on a portion of the elastic ring 32 that covers the surface 34C of the flange part 34B of the rigid ring 34 of the second sealing member 26. In other words, the water-discharging protrusions 40 are portions of the elastic ring 32. Therefore, the water-discharging protrusions 40 are formed of the same material as that of the elastic ring 32, that is, an elastomer material containing magnetic metal powder and ceramic powder.

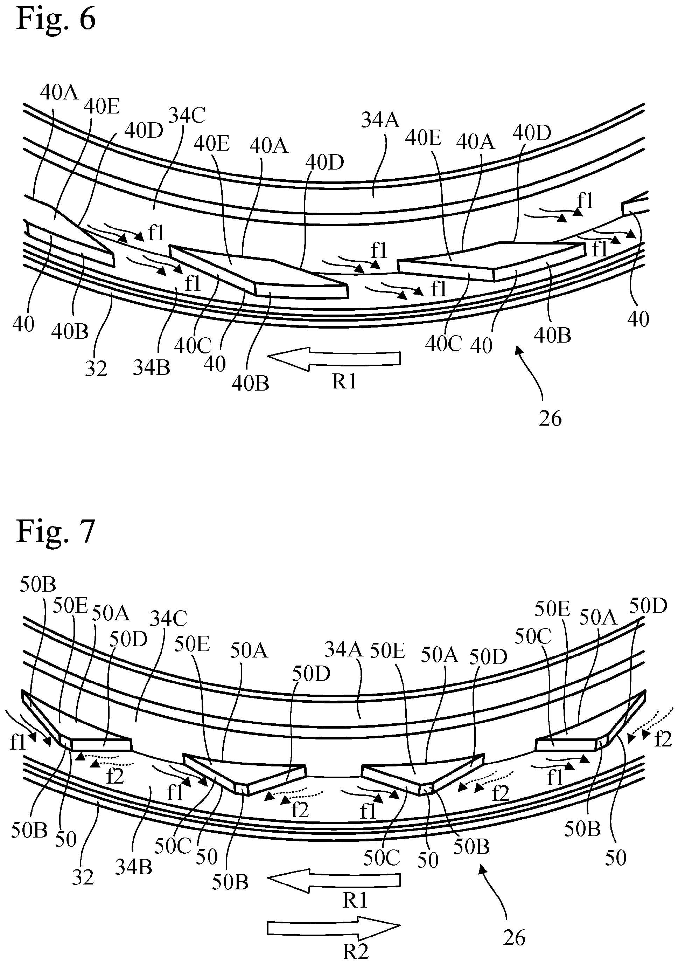

In this embodiment, as shown in Figs. 5 and 6, each water-discharging protrusion 40 has a substantially quadrangular prism shape, specifically, a substantially rhombic prism shape. More specifically, each water-discharging protrusion 40 has a substantially rhombic outline defined by an inner arc surface 40A, an outer arc surface 40B, and two inclined side surfaces 40C and 40D. As shown in Fig. 2, the bottom surface 40F of the quadrangular prism of each water-discharging protrusion 40 is parallel to the surface 34C of the flange part 34B, which faces the annular part 24B, and lies on the same plane as the surface 32A of the elastic ring 32, which faces the annular part 24B. The top surface 40E of the quadrangular prism is parallel to the surfaces 32A and 34C.

In Fig. 6, arrow R1 indicates the rotational direction of the second sealing member 26 (rotational direction of the inner race 6) when the automotive vehicle provided with the hub bearing 1 moves forward. The arc surfaces 40A and 40B extend in arc shapes along the rotational direction R1. In other words, each of the arc surfaces 40A and 40B overlaps a circle (not shown) concentric with the sleeve part 34A. On the other hand, the inclined side surface 40C intersects with the rotational direction R1 at an acute angle, whereas the inclined side surface 40D intersects with the rotational direction R1 at an obtuse angle. The inclined side surfaces 40C and 40D are parallel to each other.

As described above, foreign matter (including water and dust) may intrude into the space 46 between the annular part 24B of the first sealing member 24 and the elastic ring 32 covering the flange part 34B of the second sealing member 26 (see Figs. 2 and 3). However, multiple water-discharging protrusions 40 protrude into the space 46, and each water-discharging protrusion 40 has an inclined side surface 40C that intersects at an acute angle with the rotational direction R1 of the inner race 6 (see Fig. 6). Therefore, as the inner race 6 and the second sealing member 26 rotate, the water in the space 46 flows in the direction opposite to the rotational direction R1 of the inner race 6 and the second sealing member 26 relative to the rotation of the second sealing member 26 along the inclined side surface 40C as depicted by arrows f1 in Fig. 6. The inclined side surface 40C that intersects with the rotational direction R1 at an acute angle promotes a smooth flow of water. The water flowing in this way is quickly discharged from the space 46 through the clearance 36 (see Fig. 2). For this reason, the sealing device 21 has a superior ability to protect the hub bearing 1 so that it is sealed from the water. Furthermore, for the sealing device 21 itself, deterioration, which is accelerated in the presence of water (including muddy water or salt water), is reduced. Since the clearance 36 is annular, water flows out of the space 46 through a part of the clearance 36, whereas air outside the sealing device 21 flows into the space 46 through the other part of the clearance 36. The air flowing into the space 46 promotes the outflow of water from the space 46, and reduces the probability that the pressure in the space 46 will become negative and deform the lips 24C and 24D unexpectedly.

As described above, since the sealing device 21 has a superior ability to discharge water by the water-discharging protrusions 40, the axial lip 24D for preventing the intrusion of foreign matter is not necessary. In a case in which the axial lip 24D is not provided, no torque occurs due to the axial lip 24D sliding on the second sealing member 26 when the inner race 6 and the second sealing member 26 are rotated. Therefore, the energy efficiency of the automotive vehicle can be increased.

However, in this embodiment, the axial lip 24D is provided in order to increase the certainty of blocking foreign matter. Even in this case, since the ability to discharge water by the water-discharging protrusions 40 is superior, it is not necessary to increase the contact pressure of the axial lip 24D against the flange part 34B of the second sealing member 26. Therefore, it is possible to suppress or reduce the torque resulting from the sliding of the axial lip 24D on the second sealing member 26 while improving the ability to discharge water. In a case in which the axial lip 24D is provided, the water-discharging protrusions 40 are preferably located closer to the clearance 36 than the axial lip 24D (located between the axial lip 24D and the clearance 36) as in this embodiment. In other words, the water-discharging protrusions 40 preferably protrude into the space 46 communicating with the atmosphere. By being arranged in this way, as described above, the air outside the sealing device 21 flows into the space 46, in which the water-discharging protrusions 40 are arranged, through the clearance 36, so that discharge of the water from the space 46 is promoted.

In this embodiment, as shown in Fig. 2, each water-discharging protrusion 40 is located at a location that does not overlap the axial lip 24D. Therefore, when the inner race 6 rotates, the water-discharging protrusions 40 do not collide with or slide on the axial lip 24D, and excessive wear of the axial lip 24D is suppressed.

Furthermore, each water-discharging protrusion 40 is located distant from the cylindrical part 24A and the annular part 24B of the first sealing member 24. Therefore, when the inner race 6 rotates, the water-discharging protrusions 40 do not collide with or slide on the first sealing member 24.

In this embodiment, as shown in Fig. 2, the surface 32A of the elastic ring 32 of the second sealing member 26, which faces the annular part 24B, is parallel to the surface 24E of the annular part 24B of the first sealing member 24, which faces the flange part 34B. That is, the surface 32A on which the water-discharging protrusions 40 are formed is parallel to the surface 24E located in front of the water-discharging protrusions 40. In other words, the two surfaces defining the space 46 in which the multiple water-discharging protrusions 40 are arranged are parallel. Therefore, the efficiency for discharging water by the water-discharging protrusions 40 is better than in a case in which the two surfaces are not parallel.

In this embodiment, each water-discharging protrusion 40 has a quadrangular prism shape, and the bottom surface 40F of the quadrangular prism is parallel to the surface 34C of the flange part 34B, which faces the annular part 24B, and lies on the same plane as the surface 32A of the elastic ring 32, which faces the annular part 24B, whereas the top surface 40E of the quadrangular prism is parallel to the surface 34C of the flange part 34B and the surface 32A of the elastic ring 32. Therefore, compared with an example case in which each water-discharging protrusion 40 is of a tapered shape that becomes narrower from the bottom surface toward the top, the cross-sectional area of the water-discharging protrusions (the area on a cross section in a radial direction of the sealing device 21, that is, the area on the paper surface of Fig. 2) can be increased, and the efficiency for discharging water by the water-discharging protrusions 40 is better.

In this embodiment, as shown in Figs. 5 and 6, the length of each water-discharging protrusion 40 in the rotational direction of the inner race 6 is greater than the length of each water-discharging protrusion 40 in radial directions of the first sealing member 24 and the second sealing member 26. In particular, each water-discharging protrusion 40 has a maximum length (the length between the apex formed by the inner arc surface 40A and the inclined side surface 40C and the apex formed by the outer arc surface 40B and the inclined side surface 40D) along the rotational direction R1 of the second sealing member 26 (the rotational direction of the inner race 6). Therefore, even if hard foreign matter collides with and damages the water-discharging protrusions 40, or the water-discharging protrusions 40 are worn by the water flow, the entire water-discharging protrusions 40 do not disappear in a short period of time. That is, the water-discharging protrusions 40 have a long service life.

In this embodiment, each water-discharging protrusion 40 protrudes in the space 42 between the annular part 24B of the first sealing member 24 and the flange part 34B of the second sealing member 26, more specifically, in the space 46 between the annular part 24B of the first sealing member 24 and the elastic ring 32 of the second sealing member 26. Therefore, as is apparent from Figs. 2 and 3, the multiple water-discharging protrusions 41 are arranged in a range within the maximum diameter of the first sealing member 24. For this reason, it is not necessary to increase the size of the sealing device 21, and thus, the hub bearing 1.

In this embodiment, the multiple water-discharging protrusions 40 are made of the same material as that of the elastic ring 32, that is, an elastomer material containing magnetic metal powder and ceramic powder. Since the water-discharging protrusions 40 contain metal powder and ceramic powder, they have superior durability against the impact of hard foreign matter and superior wear resistance.

In this embodiment, the multiple water-discharging protrusions 40 are integrally mounted on the elastic ring 32 that covers the flange part 34B of the rigid ring 34 of the second sealing member 26. Therefore, since the number of parts is reduced, the assembly of the sealing device 21 is easy.

The method for forming the water-discharging protrusions 40 may be, for example, pressing using a mold or injection molding. In this case, the water-discharging protrusions 40 may be formed simultaneously with the formation of the elastic ring 32. However, the water-discharging protrusions 40 may be joined to the flange part 34B by bonding the water-discharging protrusions 40 with adhesive, or the water-discharging protrusion 40 may be formed by cutting the elastic ring 32.

Fig. 7 is a perspective view showing a second sealing member 26 of a sealing device 21 according to a modification of the first embodiment. In Fig. 7 and the subsequent drawings, the same reference symbols are used to identify components already described, and those components will not be described in detail.

In the modification of Fig. 7, each water-discharging protrusion 50 provided on the flange part 34B of the second sealing member 26 has a shape of a substantially triangular prism or a substantially trapezoidal prism. More specifically, each water-discharging protrusion 50 has a substantially triangular or substantially trapezoidal outline defined by an inner arc surface 50A, an outer arc surface 50B, and two inclined side surfaces 50C and 50D. The lengths of the two inclined side surfaces 50C and 50D are equal. However, the outer arc surface 50B may be omitted and the outline of each water-discharging protrusion 50 may be an isosceles triangle. The bottom surface of the trapezoidal prism of each water-discharging protrusion 50 is parallel to the surface 34C of the flange part 34B, which faces the annular part 24B, and lies on the same plane as the surface 32A of the elastic ring 32, which faces the annular part 24B, whereas the top surface 50E of the quadrangular prism is parallel to the surface 34C.

In this modification, each water-discharging protrusion 50 has two inclined side surfaces 50C and 50D that intersect respectively at acute angles with the two rotational directions R1 and R2 in which the inner race 6 and the second sealing member 26 rotate. In Fig. 7, arrow R1 indicates the rotational direction of the second sealing member 26 (rotational direction of the inner race 6) when the automotive vehicle provided with the hub bearing 1 moves forward. Arrow R2 indicates the rotational direction of the second sealing member 26 (rotational direction of the inner race 6) when the automotive vehicle provided with the hub bearing 1 is moved backward. The arc surfaces 50A and 50B extend in arc shapes along the rotational directions R1 and R2. In other words, each of the arc surfaces 50A and 50B overlaps a circle (not shown) concentric with the sleeve part 34A. On the other hand, the inclined side surface 50C intersects with the rotational direction R1 at an acute angle and intersects with the rotational direction R2 at an obtuse angle. The inclined side surface 50D intersects with the rotational direction R1 at an obtuse angle and intersects with the rotational direction R2 at an acute angle.

As the inner race 6 and the second sealing member 26 rotate in the rotational direction R1, the water in the space 46 flows in the direction opposite to the rotational direction R1 of the inner race 6 and the second sealing member 26 relative to the rotation of the second sealing member 26 along the inclined side surface 50C as depicted by arrows f1 in Fig. 7. The inclined side surface 50C that intersects with respect to the rotational direction R1 at an acute angle promotes a smooth flow of water. On the other hand, as the inner race 6 and the second sealing member 26 rotate in the rotational direction R2, the water in the space 46 flows in the direction opposite to the rotational direction R2 of the inner race 6 and the second sealing member 26 relative to the rotation of the second sealing member 26 along the inclined side surface 50D as depicted by arrows f2 in Fig. 7. The inclined side surface 50D that intersects with the rotational direction R2 at an acute angle promotes a smooth flow of water. The water flowing in this way is quickly discharged from the space 46 through the clearance 36 (see Fig. 2). For this reason, the sealing device 21 has a superior ability to protect the hub bearing 1 to be sealed from the water. Furthermore, for the sealing device 21 itself, deterioration, which is accelerated due to the presence of water (including muddy water or salt water), is reduced. Since the clearance 36 is annular, water flows out of the space 46 through a part of the clearance 36, whereas air outside the sealing device 21 flows into the space 46 through the other part of the clearance 36. The air flowing into the space 46 promotes the outflow of water from the space 46, and reduces the probability that the pressure in the space 46 becomes negative to deform the lips 24C and 24D unexpectedly.

The sealing device 21 according to this modification can be used for both the left and right wheels of an automotive vehicle, and can discharge water by the water-discharging protrusions 50 when the automotive vehicle moves forward and backward. When mounting the sealing device 21 on an automotive vehicle, the operating person does not have to be careful about which wheel the sealing device is for.

In this modification, each water-discharging protrusion 50 has a substantially triangular or substantially trapezoidal prism shape, and the bottom surface of the substantially triangular or substantially trapezoidal prism is parallel to the surface 34C of the flange part 34B, which faces the annular part 24B, and lies on the same plane as the surface 32A of the elastic ring 32, which faces the annular part 24B, whereas the top surface 50E of the substantially triangular or substantially trapezoidal prism is parallel to the surface 34C of the flange part 34B and the surface 32A of the elastic ring 32. Therefore, compared with an example case in which each water-discharging protrusion 50 is a tapered shape that becomes narrower from the bottom surface toward the top, the cross-sectional area of the water-discharging protrusions (the area on a cross section in a radial direction of the sealing device 21) can be increased, and the efficiency for discharging water by the water-discharging protrusions 50 is better.

The length of each water-discharging protrusion 50 in the rotational directions R1 and R2 (that is, the length of the inner arc surface 50A) is greater than the length of each water-discharging protrusion 50 in radial directions of the sealing device 21 (that is, the distance between the arc surfaces 50A and 50B). Therefore, even if hard foreign matter collides with and damages the water-discharging protrusions 50, or the water-discharging protrusions 50 are worn by the water flow, the entire water-discharging protrusions 50 do not disappear in a short period of time. That is, the water-discharging protrusions 50 have a long service life.

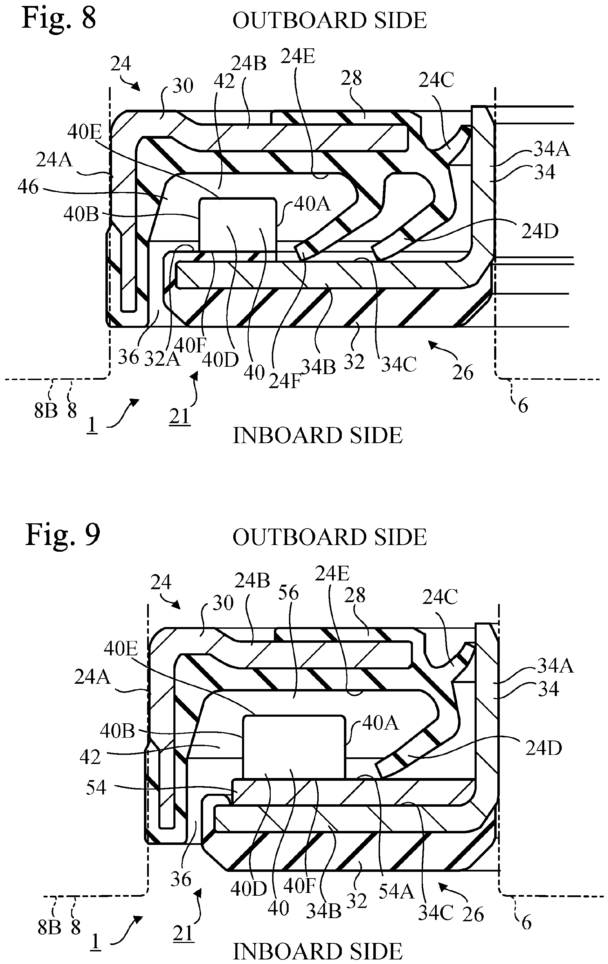

Fig. 8 is a partial cross-sectional view of a sealing device 21 according to another modification of the first embodiment. In this modification, the first sealing member 24 includes an axial lip (side lip) 24F in addition to the axial lip 24D of the first embodiment. The axial lip 24F is formed radially outside the axial lip 24D, extends laterally from the surface 24E of the annular part 24B, and has a distal end extending radially outward and toward the inboard side being in contact with the flange part 34B of the second sealing member 26. The axial lip 24F plays a main role for preventing foreign matter from flowing into the hub bearing 1 from the outside.

Each water-discharging protrusion 40 is located at a location that does not overlap with the axial lips 24D and 24F. Therefore, when the inner race 6 rotates, the water-discharging protrusions 40 do not collide with or slide on the axial lips 24D and 24F, and excessive wear of the axial lips 24D and 24F is suppressed.

In this modification, two axial lips 24D and 24F are provided in order to increase the certainty of blocking foreign matter. Even in this case, since the ability to discharge water by the water-discharging protrusions 40 is superior, it is not necessary to increase the contact pressure of the axial lips 24D and 24F against the flange part 34B of the second sealing member 26. Therefore, it is possible to suppress or reduce the torque resulting from the sliding of the axial lips 24D and 24F on the second sealing member 26 while improving the ability to discharge water. The number of axial lips may be three or more. In a case in which the axial lips 24D and 24F are provided, the water-discharging protrusions 40 are preferably located closer to the clearance 36 than the outermost axial lip 24F (located between the outermost axial lip 24F and the clearance 36) as in this modification. In other words, the water-discharging protrusions 40 preferably protrude into the space 46 communicating with the atmosphere. By being arranged in this way, as described above, the air outside the sealing device 21 flows into the space 46, in which the water-discharging protrusions 40 are arranged, through the clearance 36, so that discharge of the water from the space 46 is promoted.

Fig. 9 is a partial cross-sectional view of a sealing device according to another modification of the first embodiment. In this modification, each water-discharging protrusion 40 is not integrally mounted on the flange part 34B of the rigid ring 34 of the second sealing member 26. A circular annular plate 54 is overlaid on the flange part 34B, and each water-discharging protrusion 40 is integrally mounted on the circular annular plate 54. The circular annular plate 54 is made of a rigid material, for example, a metal material, and the water-discharging protrusions 40 are made of the same rigid material as that of the circular annular plate 54, for example, a metal material. Therefore, the water-discharging protrusions 40 have superior durability against the impact of hard foreign matter and have superior wear resistance.

The circular annular plate 54 is located in the space 42 between the annular part 24B of the first sealing member 24 and the flange part 34B of the second sealing member 26, and is in contact with the surface 34C of the flange part 34B. The circular annular plate 54 is located radially outside the sleeve part 34A of the second sealing member 26, expands radially outward, and faces the annular part 24B of the first sealing member 24. In this modification, the surface 54A of the circular annular plate 54, which faces the annular part 24B, is parallel to the surface 24E of the annular part 24B of the first sealing member 24 and the surface 34C of the flange part 34B of the second sealing member 26.

The water-discharging protrusions 40 protrude into the space 56 between the two surfaces 24E and 54A that are parallel to each other. Therefore, the efficiency for discharging water by the water-discharging protrusions 40 is better than in a case in which the two surfaces are not parallel.

In this modification, each water-discharging protrusion 40 has a quadrangular prism shape, and the bottom surface 40F of the quadrangular prism is parallel to the surface 34C of the flange part 34B, which faces the annular part 24B, and lies on the same plane as the surface 54A of the circular annular plate 54, whereas the top surface 40E of the quadrangular prism is parallel to the surface 34C of the flange part 34B. Therefore, compared with an example case in which each water-discharging protrusion 40 is of a tapered shape that becomes narrower from the bottom surface toward the top, the cross-sectional area of the water-discharging protrusions (the area on a cross section in a radial direction of the sealing device 21, that is, the area on the paper surface of Fig. 9) can be increased, and the efficiency for discharging water by the water-discharging protrusions 40 is better.

In this modification, the circular annular plate 54, and thus the water-discharging protrusions 40, are made of a metal material. However, the circular annular plate 54, and thus the water-discharging protrusion 40, may be made of, for example, a resin material containing metal powder, a resin material containing ceramic powder, a resin material containing both metal powder and ceramic powder, an elastomer material containing metal powder, an elastomer material containing ceramic powder, or an elastomer material containing both metal powder and ceramic powder. Since these materials contain at least one of metal powder and ceramic powder, they have a higher hardness than that of ordinary resin materials or elastomer materials and are not easily damaged by foreign matter. Even in this case, the water-discharging protrusions 40 have superior durability against the impact of hard foreign matter and superior wear resistance. Furthermore, the circular annular plate 54, and thus the water-discharging protrusion 40, may be formed of a resin material or an elastomer material that does not contain metal powder or ceramic powder.

In any case, the method for forming the water-discharging protrusion 40 may be, for example, pressing using a mold or injection molding. In this case, the water-discharging protrusions 40 may be formed simultaneously with the formation of the circular annular plate 54. However, the water-discharging protrusions 40 may be joined to the circular annular plate 54 by welding, soldering, or bonding, or the water-discharging protrusion 40 may be formed by cutting the circular annular plate 54.

In this modification, the water-discharging protrusions 40 are formed on a circular annular plate 54 that can be easily separated from the second sealing member 26. However, the circular annular plate 54 may be joined to the flange part 34B of the second sealing member 26.

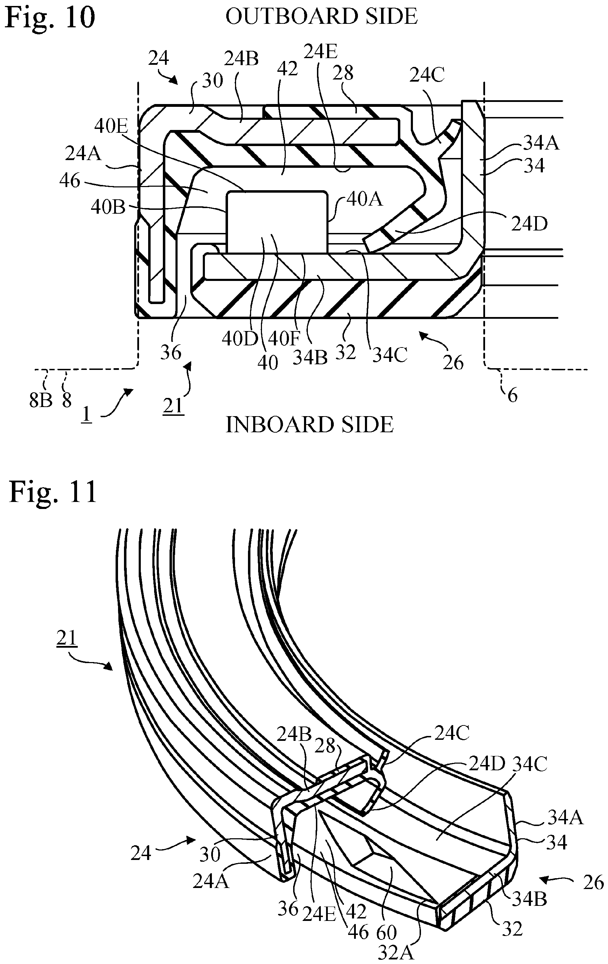

Fig. 10 is a partial cross-sectional view of a sealing device according to another modification of the first embodiment. In this modification, the circular annular plate 54 is not used, and each water-discharging protrusion 40 is directly and integrally mounted on the flange part 34B of the rigid ring 34 of the second sealing member 26. In other words, each water-discharging protrusion 40 is a part of the rigid ring 34. The bottom surface 40F of each water-discharging protrusion 40 lies on the same plane as the surface 34C of the flange part 34B, which faces the annular part 24B. The water-discharging protrusions 40 are formed of the same rigid material as that of the rigid ring 34, for example, a metal material. Therefore, the water-discharging protrusions 40 have superior durability against the impact of hard foreign matter and superior wear resistance.

Figs. 11 to 13 show a sealing device 21 according to still another modification of the first embodiment. In this modification, the multiple water-discharging protrusions 60 are integrally mounted on a portion of the elastic ring 32 that covers the surface 34C of the flange part 34B of the rigid ring 34 of the second sealing member 26. In other words, the water-discharging protrusions 60 are portions of the elastic ring 32. Therefore, the water-discharging protrusions 60 are formed of the same material as that of the elastic ring 32, that is, an elastomer material containing magnetic metal powder and ceramic powder.

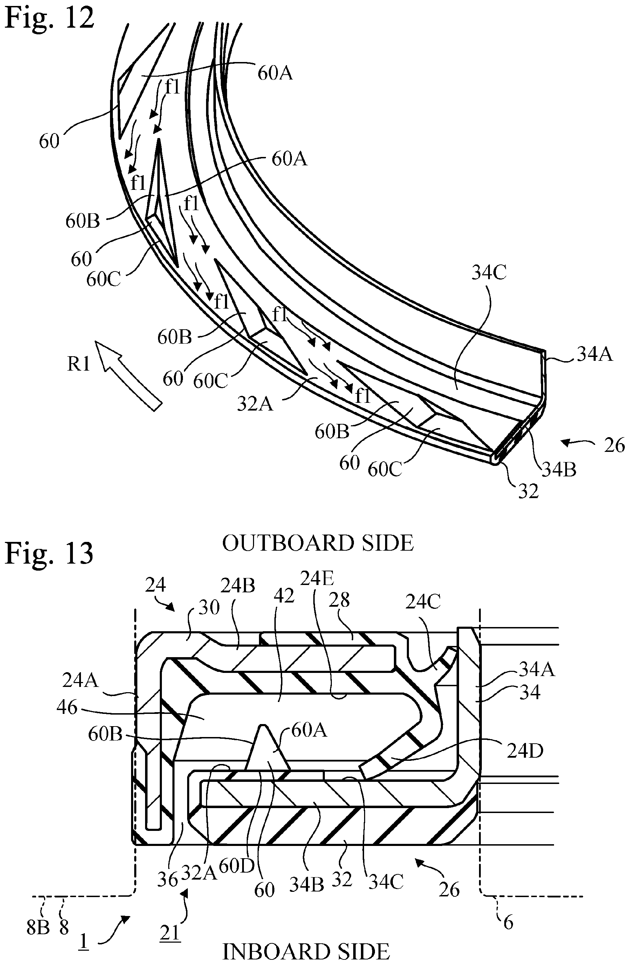

In this modification, each water-discharging protrusion 60 provided on the flange part 34B of the second sealing member 26 has a substantially triangular pyramid shape. More specifically, each water-discharging protrusion 60 has a first inclined side surface 60A being substantially triangular, a second inclined side surface 60B being substantially triangular, a third inclined side surface 60C being substantially triangular, and a bottom surface 60D being substantially triangular. However, the top portion to which the inclined side surfaces 60A, 60B, and 60C are adjacent is flat. As shown in Fig. 13, the bottom surface 60D is parallel to the surface 34C of the flange part 34B, which faces the annular part 24B, and lies on the same plane as the surface 32A of the elastic ring 32, which faces the annular part 24B. The outline of the first inclined side surface 60A is substantially an isosceles triangle so that the length of the side between the first inclined side surface 60A and the second inclined side surface 60B is equal to the length of the side between the first inclined side surface 60A and the third inclined side surface 60C.

In Fig. 12, arrow R1 indicates the rotational direction of the second sealing member 26 (rotational direction of the inner race 6) when the automotive vehicle provided with the hub bearing 1 moves forward. The first inclined side surface 60A and the second inclined side surface 60B intersect with the rotational direction R1 at acute angles. On the other hand, the side between the third inclined side surface 60C and the bottom surface 60D extends along the rotational direction R1, and is parallel to the rotational direction R1.

As the inner race 6 and the second sealing member 26 rotate, the water in the space 46 flows in the direction opposite to the rotational direction R1 of the inner race 6 and the second sealing member 26 relative to the rotation of the second sealing member 26 along the first inclined side surface 60A and the second inclined side surface 60B as depicted by arrows f1 in Fig. 12. That is, the water flows through flow paths each located between the first inclined side surface 60A of a certain water-discharging protrusion 60 and the second inclined side surface 60B of the adjacent water-discharging protrusion 60. The first inclined side surface 60A and the second inclined side surface 60B that intersect at acute angles with the rotational direction R1 promote a smooth flow of water. The water flowing in this way is quickly discharged from the space 46 through the clearance 36 (see Fig. 2). For this reason, the sealing device 21 has a superior ability to protect the hub bearing 1 to be sealed from the water. Furthermore, for the sealing device 21 itself, deterioration, which is accelerated due to the presence of water (including muddy water or salt water), is reduced. Since the clearance 36 is annular, water flows out of the space 46 through a part of the clearance 36, whereas air outside the sealing device 21 can flow into the space 46 through the other part of the clearance 36. Therefore, the probability that the pressure in the space 46 becomes negative and unexpectedly deforms the lips 24C and 24D is reduced.

As described above, since the sealing device 21 has a superior ability to discharge water by the water-discharging protrusions 60, the axial lip 24D for preventing the intrusion of foreign matter is not necessary. In a case in which the axial lip 24D is not provided, no torque occurs due to the axial lip 24D sliding on the second sealing member 26 when the inner race 6 and the second sealing member 26 are rotated. Therefore, the energy efficiency of the automotive vehicle can be increased.

However, in this modification, the axial lip 24D is provided in order to increase the certainty of blocking foreign matter. Even in this case, since the ability to discharge water by the water-discharging protrusions 60 is superior, it is not necessary to increase the contact pressure of the axial lip 24D against the flange part 34B of the second sealing member 26. Therefore, it is possible to suppress or reduce the torque resulting from the sliding of the axial lip 24D on the second sealing member 26 while improving the ability to discharge water. In a case in which the axial lip 24D is provided, the water-discharging protrusions 40 are preferably located closer to the clearance 36 than the axial lip 24D (located at a position between the axial lip 24D and the clearance 36) as in this modification. In other words, the water-discharging protrusions 40 preferably protrude into the space 46 communicating with the atmosphere.

In this modification, as shown in Fig. 13, each water-discharging protrusion 60 is located at a location that does not overlap the axial lip 24D. Therefore, when the inner race 6 rotates, the water-discharging protrusions 60 do not collide with or slide on the axial lip 24D, and excessive wear of the axial lip 24D is suppressed.

Furthermore, each water-discharging protrusion 60 is located distant from the cylindrical part 24A and the annular part 24B of the first sealing member 24. Therefore, when the inner race 6 rotates, the water-discharging protrusions 60 do not collide with or slide on the first sealing member 24.

In this modification, as shown in Fig. 9, the surface 32A of the elastic ring 32 of the second sealing member 26, which faces the annular part 24B, is parallel to the surface 24E of the annular part 24B of the first sealing member 24, which faces the flange part 34B. That is, the surface 32A on which the water-discharging protrusions 60 are formed is parallel to the surface 24E located in front of the water-discharging protrusions 60. In other words, the two surfaces defining the space 46 in which the multiple water-discharging protrusions 60 are arranged are parallel. Therefore, the efficiency for discharging water by the water-discharging protrusion 60 is better than in a case in which the two surfaces are not parallel.

In this modification, as shown in Figs. 12 and 13, the length of each water-discharging protrusion 60 in the rotational direction of the inner race 6 is greater than the length of each water-discharging protrusion 60 in radial directions of the first sealing member 24 and the second sealing member 26. Therefore, even if hard foreign matter collides with and damages the water-discharging protrusion 60, or the water-discharging protrusions 60 are worn by the water flow, the entire water-discharging protrusions 60 do not disappear in a short period of time. That is, the water-discharging protrusions 60 have a long service life.

In this embodiment, each water-discharging protrusion 60 protrudes in the space 42 between the annular part 24B of the first sealing member 24 and the flange part 34B of the second sealing member 26, more specifically, in the space 46 between the annular part 24B of the first sealing member 24 and the elastic ring 32 of the second sealing member 26. Therefore, as is apparent from Figs. 11 and 13, the multiple water-discharging protrusions 60 are arranged in a range within the maximum diameter of the first sealing member 24. For this reason, it is not necessary to increase the size of the sealing device 21, and thus, the hub bearing 1.

In this modification, each water-discharging protrusion 60 is integrally mounted on the elastic ring 32 that covers the flange part 34B of the rigid ring 34 of the second sealing member 26. However, similarly to the water-discharging protrusions 40 of the modification shown in Fig. 9, each water-discharging protrusion 60 may be integrally mounted on a circular annular plate 54 (not shown in Figs. 11 to 13) laid on the flange part 34B.

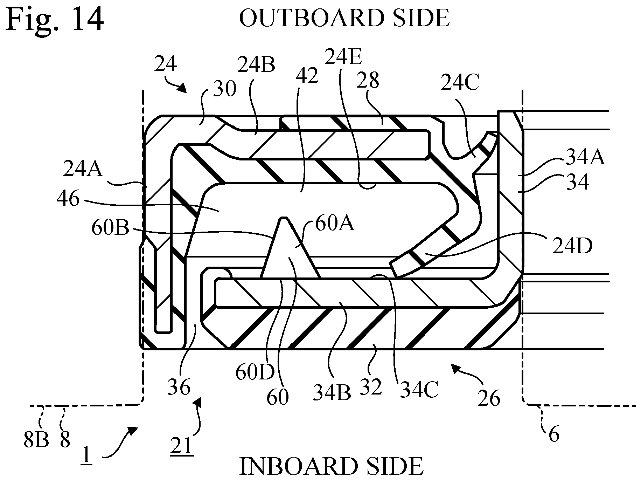

Furthermore, as shown in Fig. 14, the circular annular plate 54 may not be used, and each water-discharging protrusion 60 may be directly and integrally mounted on the flange part 34B of the rigid ring 34 of the second sealing member 26. In other words, each water-discharging protrusion 60 may be a part of the rigid ring 34. In the modification of Fig. 14, the bottom surface 60D of each water-discharging protrusion 60 lies on the same plane as the surface 34C of the flange part 34B, which faces the annular part 24B. The water-discharging protrusions 60 are formed of the same rigid material as that of the rigid ring 34, for example, a metal material. Therefore, the water-discharging protrusions 60 have superior durability against the impact of hard foreign matter and superior wear resistance.

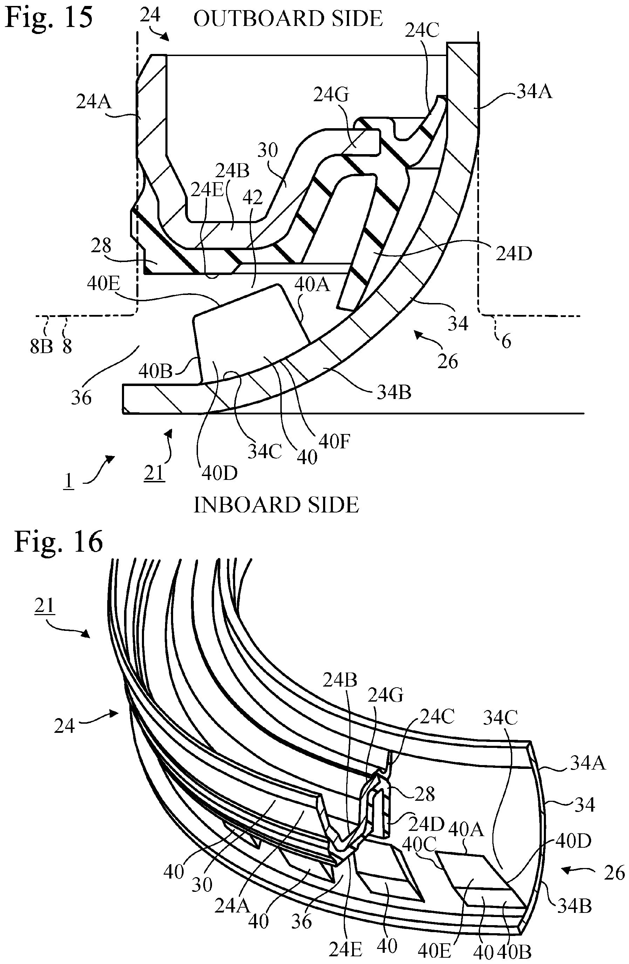

Figs. 15 and 16 show a sealing device 21 according to still another modification of the first embodiment. In this modification, a first sealing member 24 and a second sealing member 26 different from those of the first embodiment are used. In the first sealing member 24, the cylindrical part 24A extends in the opposite direction to the cylindrical part 24A of the first embodiment. An inclined connecting part 24G is connected to the inner end edge of the annular part 24B, and lips 24C and 24D extend from the inner end of the inclined connecting part 24G. The inclined connecting part 24G includes a rigid ring 30 and an elastic ring 28.

In contrast to the first embodiment, the second sealing member 26 does not have the elastic ring 32 and is formed of only the rigid ring 34. The flange part 34B of the rigid ring 34 is a curved plate. Each water-discharging protrusion 40 is integrally mounted on the flange part 34B of the rigid ring 34 of the second sealing member 26. In other words, the water-discharging protrusions 40 are portions of the rigid ring 34. Therefore, the water-discharging protrusions 40 are formed of the same rigid material as that of the rigid ring 34, for example, a metal material. Each water-discharging protrusion 40 protrudes into the space 42 between the annular part 24B of the first sealing member 24 and the flange part 34B of the second sealing member 26. In this modification, the surface 34C of the flange part 34B of the second sealing member 26, which faces the annular part 24B, is not parallel to the surface 24E of the annular part 24B of the first sealing member 24, which faces the flange part 34B.

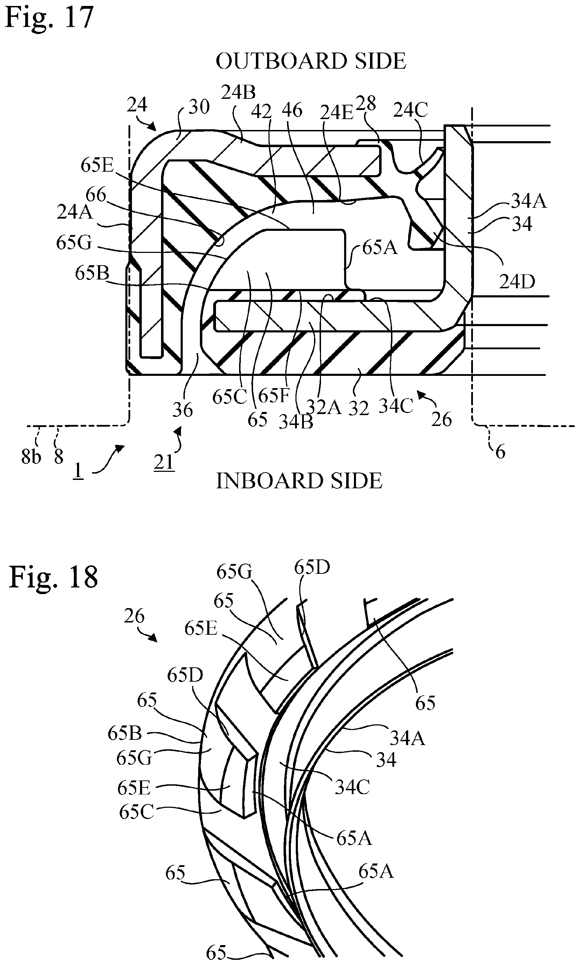

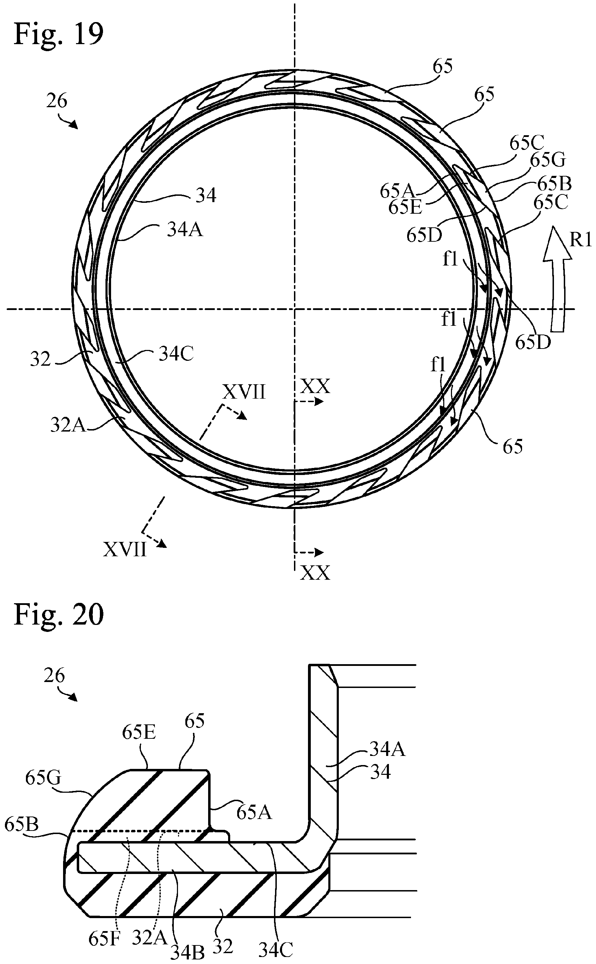

Fig. 17 shows a sealing device 21 according to still another modification of the first embodiment. Fig. 18 is a perspective view of the second sealing member 26 of this modification, and Fig. 19 is a front view of the second sealing member 26, whereas Fig. 20 is a cross-sectional view taken along the line XX-XX in Fig. 19. Fig. 17 is a cross-sectional view of the sealing device 21 taken along line XVII-XVII in Fig. 19.

As shown in Figs. 17 to 20, multiple water-discharging protrusions 65 that protrude toward the annular part 24B of the first sealing member 24 are supported by the second sealing member 26. The water-discharging protrusions 65 have the same shape and the same size, and are arranged at equiangular intervals in the circumferential direction. As shown in Fig. 17, the water-discharging protrusions 65 protrude into the space 42 between the annular part 24B of the first sealing member 24 and the flange part 34B of the second sealing member 26 (more specifically, the space 46 between the surface 24E of the annular part 24B and the surface 32A of the elastic ring 32).

In this modification, the multiple water-discharging protrusions 65 are integrally mounted on the portion of the elastic ring 32 that covers the surface 34C of the flange part, which faces the annular part 24B. In other words, the water-discharging protrusions 65 are portions of the elastic ring 32. Therefore, the water-discharging protrusion 65 is formed of the same material as the elastic ring 32, that is, an elastomer material containing magnetic metal powder and ceramic powder.

In this modification, as shown in Fig. 19, each water-discharging protrusion 65 has a substantially quadrangular outline, specifically a substantially rhombic outline, when viewed along the axial direction of the second sealing member 26. As shown in Figs. 17 and 20, each water-discharging protrusion 65 has a substantially rectangular outline with one corner formed in an arc shape when viewed from the side of the second sealing member 26.

More specifically, as shown in Fig. 19, each water-discharging protrusion 65 has a substantially rhombic outline defined by an inner arc surface 65A, an outer arc line 65B, and two inclined side surfaces 65C and 65D. The outer arc line 65B substantially coincides with the outer peripheral contour of the elastic ring 32 covering the outer peripheral contour of the rigid ring 34 in the second sealing member 26.

As shown in Figs. 17 and 20, each water-discharging protrusion 65 has a substantially quadrangle outline defined by the inner arc surface 65A, a top surface 65E, a curved surface 65G, and a bottom surface 65F. The bottom surface 65F is parallel to the surface 34C of the flange part 34B, which faces the annular part 24B, and lies on the same plane as the surface 32A of the elastic ring 32, which faces the annular part 24B. The top surface 65E is parallel to the surfaces 32A and 34C. The curved surface 65G is curved in an arc shape so that the more radially inward the positions on the curved surface 65G, the more distant from the flange part 34B.

The elastic ring 28 of the first sealing member 24 has a curved surface 66 extending from the cylindrical part 24A to the annular part 24B. The curved surface 66 is curved in an arc shape so that the more radially inward the positions on the curved surface 66, the more distant from the flange part 34B. The curved surface 65G of the water-discharging protrusion 65 faces the curved surface 66 of the first sealing member 24 and is formed substantially in parallel with the curved surface 66. The curved surface 66 defines a narrow space 42 in which the water-discharging protrusion 65 having the curved surface 65G can rotate.

In Fig. 19, arrow R1 indicates the rotational direction of the second sealing member 26 (rotational direction of the inner race 6) when the automotive vehicle provided with the hub bearing 1 moves forward. The inner arc surface 65A and the outer arc line 65B extend in arc shapes along the rotational direction R1. In other words, each of the inner arc surface 65A and the outer arc line 65B overlaps a circle (not shown) concentric with the sleeve part 34A. On the other hand, the inclined side surface 65C intersects with the rotational direction R1 at an acute angle, and the inclined side surface 65D intersects with the rotational direction R1 at an obtuse angle.

As described above, foreign matter (including water and dust) may intrude into the space 42 (see Fig. 17) between the elastic ring 32 that covers the annular part 24B of the first sealing member 24 and the flange part 34B of the second sealing member 26. However, multiple water-discharging protrusions 65 protrude into the space 42, and each water-discharging protrusion 65 has an inclined side surface 65C that intersects at an acute angle with the rotational direction R1 of the inner race 6 (see Fig. 19). Therefore, as the inner race 6 and the second sealing member 26 rotate, the water in the space 42 flows in the direction opposite to the rotational direction R1 of the inner race 6 and the second sealing member 26 relative to the rotation of the second sealing member 26 along the inclined side surface 65C as depicted by arrows f1 in Fig. 19. The inclined side surface 65C that intersects with the rotational direction R1 at an acute angle promotes a smooth flow of water. The water flowing in this way is quickly discharged from the space 42 through the clearance 36 (see Fig. 17). For this reason, the sealing device 21 has superior ability to protect the hub bearing 1 to be sealed from the water. Furthermore, for the sealing device 21 itself, deterioration, which is accelerated due to the presence of water (including muddy water or salt water), is reduced. Since the clearance 36 is annular, water flows out of the space 42 through a part of the clearance 36, whereas air outside the sealing device 21 flows into the space 42 through the other part of the clearance 36. The air flowing into the space 42 promotes the outflow of water from the space 42, and reduces the probability that the pressure in the space 42 becomes negative to deform the lips 24C and 24D unexpectedly.

In this modification, the first sealing member 24 has a curved surface 66, and each water-discharging protrusion 65 has a curved surface 65G, which the curved surface 65G faces. Since the first sealing member 24 and each of the water-discharging protrusions 65 are provided with the curved surfaces 66 and 65G, foreign matter is unlikely to enter the space 42 between the annular part 24B and the flange part 34B from the outside.

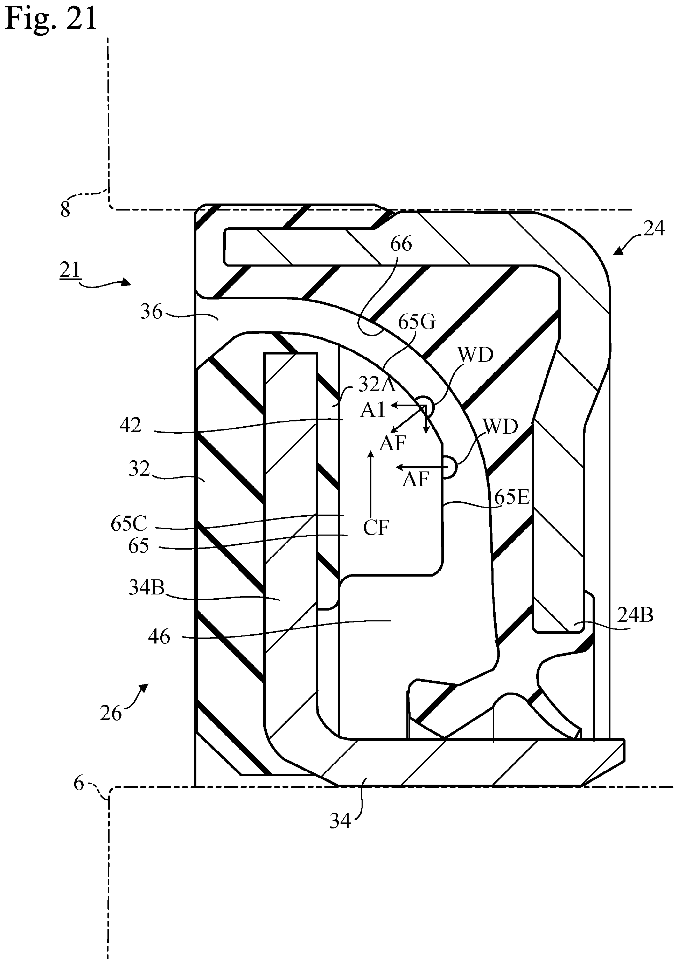

Moreover, the more radially outward the positions on the curved surfaces 65G, the closer to the flange part 34B of the second sealing member. Accordingly, the ability to discharge water is high. This advantage will be described with reference to Fig. 21. As shown in Fig. 21, the centrifugal force CF is exerted on the air in the space 42 as the inner race 6 and the second sealing member 26 rotate. The top surfaces 65E of the water-discharging protrusions 65 are located perpendicular to the axial direction of the sealing device 21, and an adhesion force AF is exerted in axial directions on water drops WD attached to the top surfaces 65E. The adhesion force AF is caused by the surface tension or cohesion force of water, and is exerted in the normal directions of the surfaces with which the water is in contact so that the water adheres to the surfaces. The water drops WD attached to the top surfaces 65E are moved radially outward, for example, toward the curved surfaces 65G by the resultant force of the centrifugal force CF, the adhesion force AF, and the gravitational force. The curved surface 65G is inclined with respect to the axial direction of the sealing device 21, and the adhesion force AF is exerted on the water drops WD attached to the curved surfaces 65G in the normal directions of the curved surfaces 65G. The water drops WD attached to the curved surfaces 65G are moved radially outward, that is, toward the annular clearance 36 by the resultant force of the centrifugal force CF, the adhesion force AF, and the gravitational force. In particular, the water drops WD adhering to the curved surfaces 65G are moved toward the clearance 36 by the axial direction component A1 of the adhesion force AF. Therefore, the curved surfaces 65G promote water discharge.

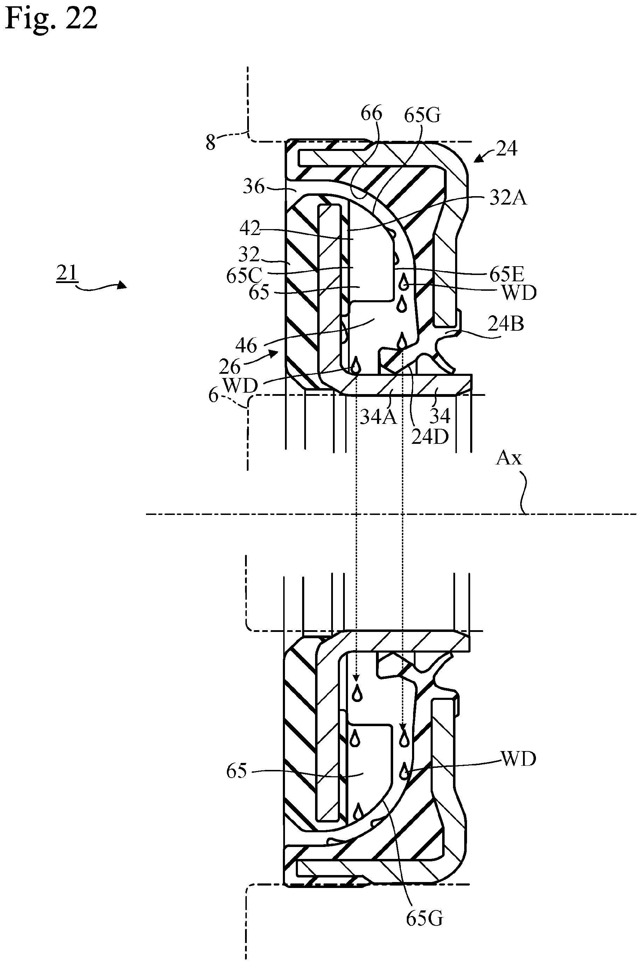

Furthermore, the more radially outward the positions on the curved surface 66 of the first sealing member 24, the closer to the flange part 34B. Accordingly, the ability to discharge water is high. This advantage will be described with reference to Fig. 22. As shown in Fig. 22, the water drops WD remain in the space 42 after the rotation of the inner race 6 and the second sealing member 26 is stopped. Above the central axis Ax of the sealing device 21, the water drops WD fall on the outer peripheral surface of the sleeve part 34A of the rigid ring 34 or the axial lip 24D through the curved surfaces 65G of the water-discharging protrusions 65 by the gravitational force. Then, the water drops WD pass through the outer peripheral surface of the sleeve part 34A or the axial lip 24D by the gravitational force, as depicted by the broken-line arrows in the drawing, and fall on the curved surface 66 of the first sealing member 24 below the central axis Ax of the sealing device 21. Since the more radially outward the positions on the curved surface 66 of the first sealing member 24, the closer to the flange part 34B, the water drops WD are quickly discharged from the annular clearance 36.

In this modification, as shown in Fig. 19, the length of each water-discharging protrusion 65 in the rotational direction of the inner race 6 is greater than the length of each water-discharging protrusion 65 in radial direction of the first sealing member 24 and the second sealing member 26. In particular, each water-discharging protrusion 65 has a maximum length (the length between the apex formed by the inner arc surface 65A and the inclined side surface 65C and the apex formed by the outer arc line 65B and the inclined side surface 65D) along the rotational direction R1 of the second sealing member 26 (rotational direction of the inner race 6). Therefore, even if hard foreign matter collides with and damages the water-discharging protrusions 65, or the water-discharging protrusions 65 are worn by the water flow, the entire water-discharging protrusions 65 do not disappear in a short period of time. That is, the water-discharging protrusions 65 have a long service life.

In this modification, each water-discharging protrusion 65 protrudes into the space 42 between the annular part 24B of the first sealing member 24 and the flange part 34B of the second sealing member 26. Therefore, as apparent from Fig. 17, the multiple water-discharging protrusions 65 are arranged in a range within the maximum diameter of the first sealing member 24. For this reason, it is not necessary to increase the size of the sealing device 21, and thus, the hub bearing 1.

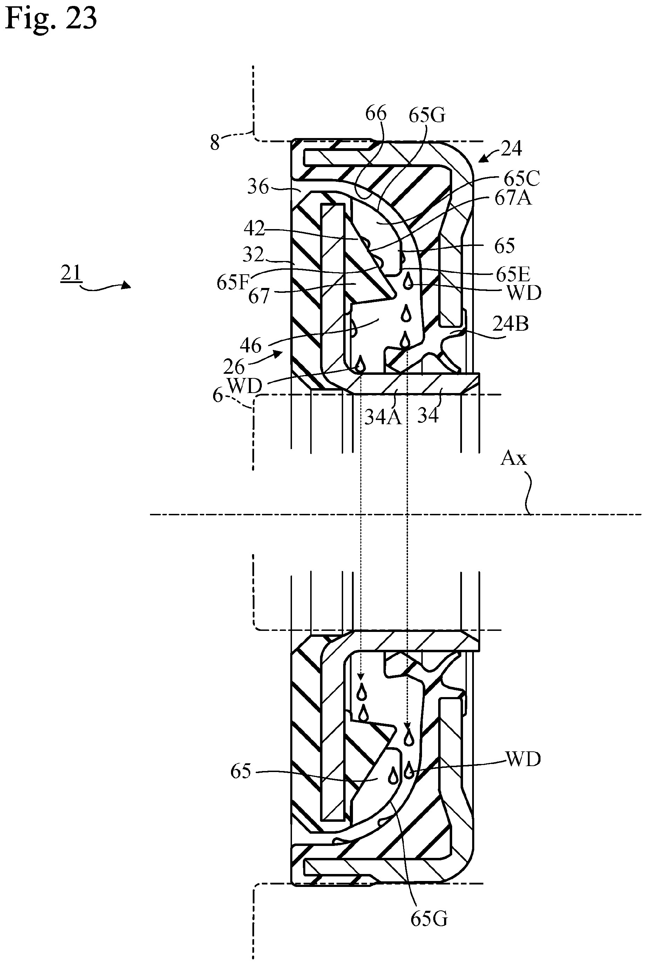

Furthermore, as shown in Fig. 23, an annular circular protrusion 67 having an inclined surface 67A may be attached to the second sealing member 26, and the water-discharging protrusions 65 may protrude from the inclined surface 67A. The circular protrusion 67 protrudes toward the annular part 24B of the first sealing member 24 and has a substantially triangular cross section. The circular protrusion 67 has an inclined surface 67A such that the more radially inward the positions on the inclined surface 67A, the more distant from the flange part 34B of the second sealing member 26. In this case, since the first sealing member 24 has an annular circular protrusion 67 having the inclined surface 67A from which the multiple water-discharging protrusions 65 protrude, the shape of the space 42 between the annular part 24B and the flange part 34B is more complicated. Therefore, foreign matter is less likely to enter into the space 42 from the outside.

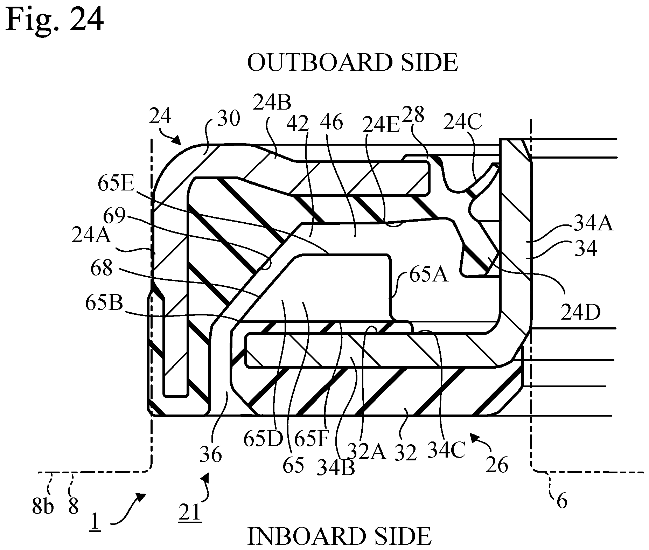

In the modifications of Figs. 17 to 23, the curved surfaces 66 and 65G are formed on the first sealing member 24 and the water-discharging protrusions 65, respectively. However, as shown in Fig. 24, instead of the curved surfaces 65G of the water-discharging protrusions 65, inclined surfaces 68 may be provided such that the more radially inward the positions on the inclined surfaces 68, the more distant from the flange part 34B. In this case, the first sealing member 24 may be provided with an inclined surface 69 that is inclined away from the flange part 34B and substantially parallel to the inclined surfaces of the water-discharging protrusions 65.

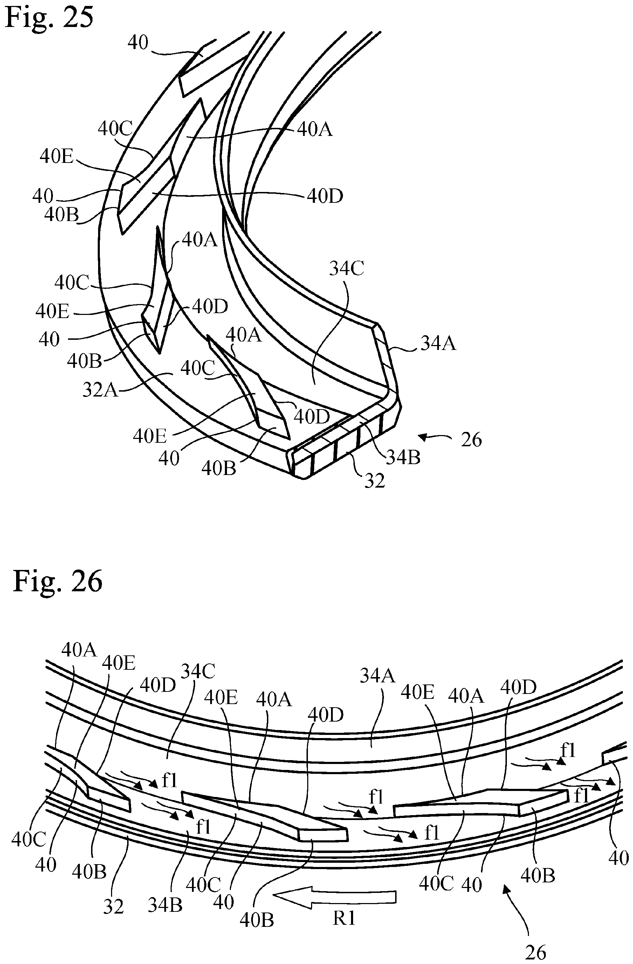

In the embodiment and the modifications described above, the inclined side surfaces 40C, 50C, 50D, and 65C of the water-discharging protrusions 40, 50, and 65 that promote the outflow of water, are flat surfaces. However, as shown in Figs. 25 and 26, each inclined side surface 40C may be concavely curved with respect to both ends of the inclined side surface 40C when viewed along the axial direction of the sealing device 21. The inclined side surfaces 50C, 50D, and 65C of the water-discharging protrusions 50 and 65 may be similarly concavely curved.

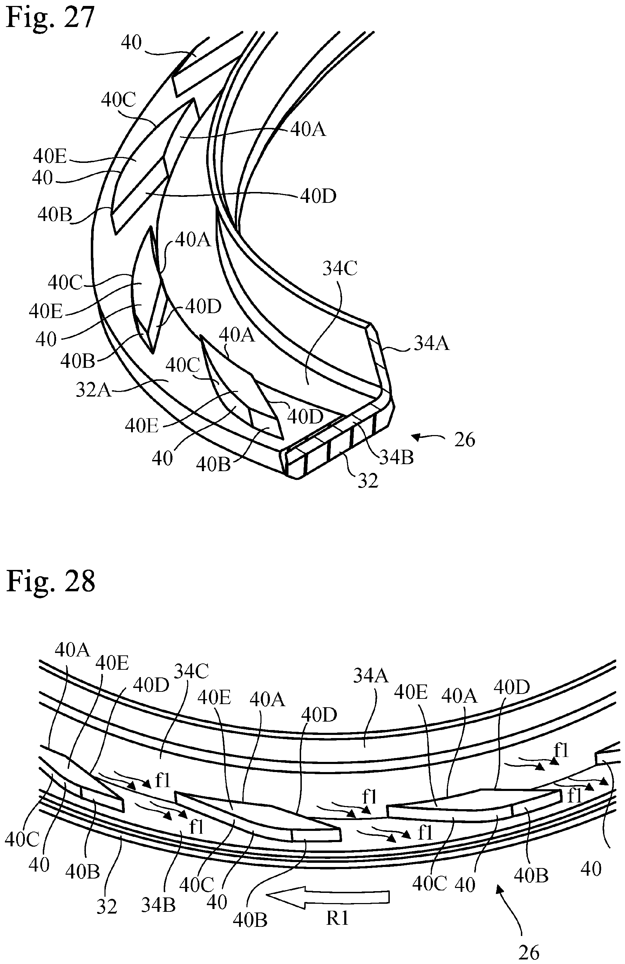

Alternatively, as shown in Figs. 27 and 28, each inclined side surface 40C may be convexly curved with respect to both ends of the inclined side surface 40C when viewed along the axial direction of the sealing device 21. The inclined side surfaces 50C, 50D, and 65C of the water-discharging protrusions 50 and 65 may be similarly convexly curved.

The above-described embodiment and various modifications may be combined as long as there is no conflict. For example, the water-discharging protrusions 40 of the embodiment of Fig. 2 may be integrally mounted on the flange part 34B of the rigid ring 34 instead of the elastic ring 32. In this case, the water-discharging protrusions 40 may be formed of a metal material. The water-discharging protrusions 40 of the modification of Fig. 15 and Fig. 16 may be integrally mounted on a circular annular plate (not shown) or an elastic ring located on the flange part 34B instead of the flange part 34B of the rigid ring 34. In this case, the water-discharging protrusions 40 may be formed of a metal material, or a resin material, an elastomer material, a resin material containing at least one of metal powder and ceramic powder, or an elastomeric material containing at least one of metal powder and ceramic powder.

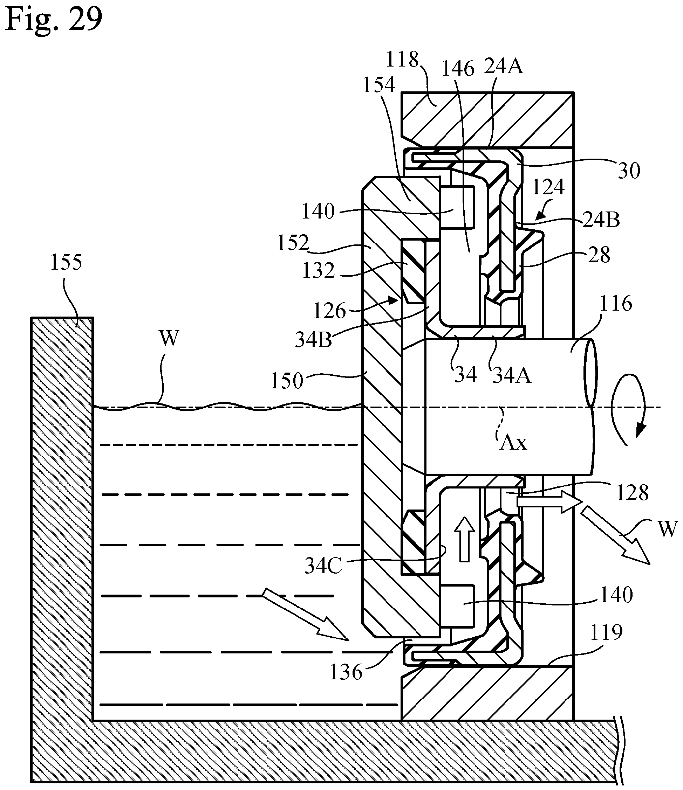

A test for confirming the water discharge effect was conducted on the first embodiment and the modifications thereof. Fig. 29 shows a test apparatus used for this test. The test apparatus includes a tank 155, a rotation shaft 116, a first sealing member 124, a second sealing member 126, a rotation plate 150, and an outer wall member 118.

Water W is reserved in the tank 155. The rotating shaft 116 imitates the inner race 6, but is a solid round bar. The rotating shaft 116 is rotated around the central axis Ax thereof that is oriented horizontally. The outer wall member 118 imitates the outer race 8 and has a circular through hole 119. The boundary between the outer periphery of the lower portion of the outer wall member 118 and the inner surface of the tank 155 is sealed. The first sealing member 124, the second sealing member 126, and the rotating plate 150 are located radially inside the through hole 119 of the outer wall member 118.

The first sealing member 124 imitates the first sealing members 24 according to the first embodiment and the modifications, but does not have lips such as the radial lip 24C and the axial lip 24D. The first sealing member 124 is a stationary sealing member that is attached to the outer wall member 118 and does not rotate. The first sealing member 124 is of a composite structure having the elastic ring 28 and the rigid ring 30. The first sealing member 124 has a cylindrical part 24A and an annular part 24B. The cylindrical part 24A is engaged by interference fit (that is, is press-fitted) into the through hole 119 of the outer wall member 118.

The second sealing member 126 and the rotating plate 150 cooperate to imitate the second sealing members 26 of the first embodiment and the modifications. The second sealing member 126 has a rigid ring 34 of the second sealing member 26 and an elastic ring 132. The end of the rotating shaft 116 is engaged by interference fit (that is, is press-fitted) into the sleeve part 34A of the rigid ring 34. The elastic ring 132 is in close contact with the flange part 34B of the rigid ring 34.

The rotating plate 150 has a disc portion 152 and a circular ring portion 154. The disc portion 152 is located concentrically with the rotating shaft 116 and faces the end surface of the rotating shaft 116. The circular ring portion 154 is located concentrically with the disc portion 152, and expands from the radial outer portion of the disc portion 152 toward the annular part 24B of the first sealing member 124. The circular ring portion 154 is located inside the cylindrical part 24A of the first sealing member 124, and an annular clearance 136 is provided between the circular ring portion 154 and the cylindrical part 24A. The clearance 136 corresponds to the clearance 36 of the first embodiment and the modifications.

The flange part 34B of the rigid ring 34 is engaged by interference fit (that is, is press-fitted) into the circular ring portion 154 of the rotating plate 150. The elastic ring 132 is compressed between the flange part 34B and the disc portion 152 of the rotating plate 150, and seals the gap between the flange part 34B and the disc portion 152.

The surface of the circular ring portion 154 on the side of the annular part 24B is flush with or parallel to the surface 34C of the flange part 34B, which faces the annular part 24B. These surfaces are distant from the annular part 24B, and a space 146 is provided between these surfaces and the annular part 24B. The space 146 corresponds to the space 46 of the first embodiment and the modifications.

Multiple water-discharging protrusions 140 are formed on the surface of the circular ring portion 154 on the side of the annular part 24B. The water-discharging protrusions 140 correspond to the water-discharging protrusion 40 of the first embodiment, and has a substantially quadrangular prism shape, specifically, a substantially rhombic pillar shape.

Therefore, the illustrated test apparatus has a shape imitating the first embodiment shown in Fig. 2 or the modification shown in Fig. 10. As the rotating shaft 116 rotates, the second sealing member 126 and the rotating plate 150 rotate together with the water-discharging protrusions 140. On the other hand, the first sealing member 124 fixed to the outer wall member 118 is maintained in a stationary state.

However, in contrast to the first sealing member 24 according to the first embodiment and the modifications, the first sealing member 124 does not have a lip. A clearance 128 is provided between the inner end edge of the first sealing member 124 and the rigid ring 34 of the second sealing member 126.

Therefore, when the water W stored in the tank 155 enters the space 146 through the lower part of the annular clearance 136, it flows out through the clearance 128. On the other hand, air flows into the space 146 through the upper part of the annular clearance 136, and the inflowing air promotes the outflow of water from the space 146.

In order to confirm the water discharge effect by the water-discharging protrusions 140, a test apparatus without the water-discharging protrusion 140 was prepared for comparison, although not shown. In addition, another comparative test apparatus provided with multiple substantially triangular pyramid water-discharging protrusions, instead of the multiple substantially quadrangular prism water-discharging protrusions 140, was also prepared. This test apparatus has a shape imitating the modifications shown in Figs. 13 or 14.

In the test, for each of these test apparatuses, the rotation speed of the rotating shaft 116 was changed and the weight of the water W flowing out for 1 minute through the clearance 128 was measured at each rotation speed. From the measured weight, the amount of water flowing out per unit time, that is, the flow rate (g/min) was calculated.

In the test, after the flow rate of the water W flowing out through the clearance 128 was stabilized (that is, after a steady state was reached), and after the height of the water surface reached the height of the central axis Ax of the rotating shaft 116, the weight of outflow water W was measured. Under each condition, the measurement was performed 5 times and the average value was calculated. The calculated flow rate can be considered as the amount of water reaching the axial lip 24D of the sealing device 21 in an environment with a lot of water.

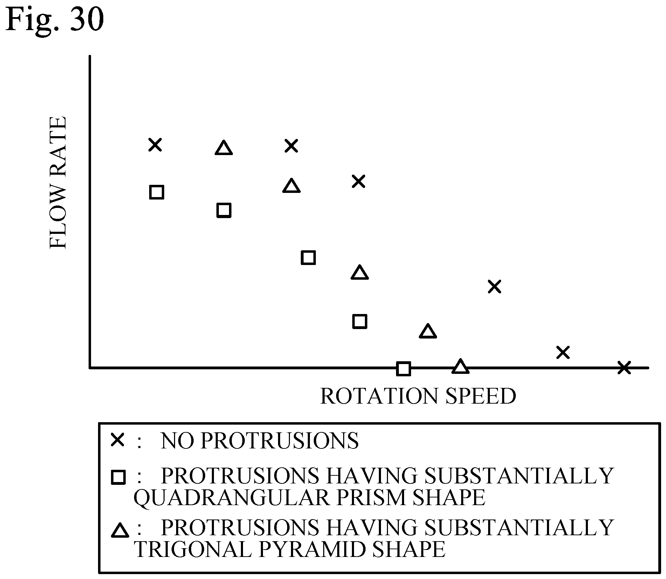

Fig. 30 shows the results of the test. In any of the test apparatuses, at high rotation speeds, the water W was splashed by the rotation of the rotating plate 150 attached to the rotating shaft 116, and thus, the flow rate was zero. However, the flow rate of the test apparatus provided with multiple water-discharging protrusions 140 having a substantially quadrangular prism shape was clearly less than those of the other test apparatuses, and the rotation speed at which the flow rate was zero was the lowest. This is presumed to be because more water W is discharged by the water-discharging protrusions 140 having a substantially quadrangular prism shape that rotates together with the rotating plate 150. In addition, the flow rate of the test apparatus provided with multiple water-discharging protrusions having a substantially triangular prism shape was less than that of the test apparatus without the water-discharging protrusions, the rotation speed at which the flow rate was zero was lower. As described above, the water discharge effect by the multiple water-discharging protrusions could be confirmed.

### SECOND EMBODIMENT

The first embodiment described above relates to the sealing device 21 on the inboard side of the hub bearing 1. The second embodiment of the present invention relates to a sealing structure including a sealing device 20 on the outboard side of the hub bearing 1.

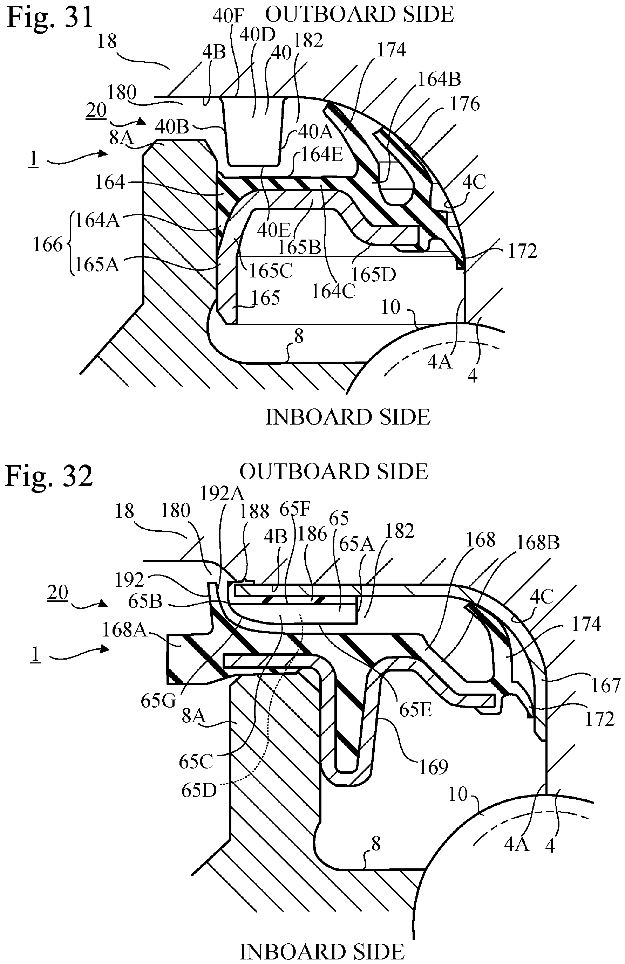

As shown in Fig. 31, the sealing device (sealing member) 20 is located in a gap between the end portion 8A on the outboard side of the outer race 8 of the hub bearing 1 and the hub 4 of the hub bearing 1. Specifically, the sealing device 20 is located inside a space surrounded by a cylindrical end portion 8A on the outboard side of the outer race 8 of the hub bearing 1, the outer peripheral surface 4A of a cylindrical part, in the vicinity of the balls 10, of the hub 4 of the hub bearing 1, a flange surface 4B of the hub 4 expanding outward than the outer peripheral surface 4A, and an arc surface 4C connecting the outer peripheral surface 4A and the flange surface 4B. The flange surface 4B is a surface on the inboard side of the outboard side flange 18. Although the sealing device 20 is annular, only the left part is shown in Fig. 31.

The sealing device 20 is of a composite structure having an elastic ring 164 and a rigid ring 165. The elastic ring 164 is made of an elastic material such as an elastomer. The rigid ring 165 is made of a rigid material, for example, metal, and reinforces the elastic ring 164. A part of the rigid ring 165 is embedded in the elastic ring 164 and is in close contact with the elastic ring 164.

The elastic ring 164 has a cylindrical part 164A, an inclined connecting part 164B, an annular part 164C, and lips 172, 174, and 176. The cylindrical part 164A is engaged by interference fit (that is, is press-fitted) into the inner peripheral surface of the end portion 8A of the outer race 8. The inclined connecting part 164B is located radially inside the cylindrical part 164A. The annular part 164C connects the cylindrical part 164A and the inclined connection part 164B. The lips 172, 174, and 176 extend from the inclined connection part 164B toward the hub 4 of the hub bearing 1.

The annular part 164C has an annular shape, and expands radially inward from one end of the cylindrical part 164A toward the outer peripheral surface 4A of the cylindrical part of the hub 4 so as to be orthogonal to the central axis Ax of the hub bearing 1. The annular part 164C faces the flange surface 4B of the outboard side flange 18. In this embodiment, the surface 164E of the annular part 164C, which faces the flange surface 4B, is parallel to the flange surface 4B.

In this embodiment, the inclined connecting part 164B extends obliquely from the annular part 164C radially inward and toward the inboard side, is bent to be orthogonal to the central axis Ax of the hub bearing 1, and extends further inwardly in radial directions.

Each of the lips 172, 174, and 176 is made of only an elastic material, and is a thin plate-like ring extending from the inclined connection part 164B, and the distal end of each lip is brought into contact with the hub 4. Whereas the sealing device 20 is attached to the stationary outer race 8, the hub 4 rotates, so that the lips 172, 174, and 176 slide on the hub 4.

The lip 172 is a radial lip or grease lip that extends from the innermost edge of the inclined connecting part 164B, and is to be in contact with the outer peripheral surface 4A of the cylindrical part of the hub 4 near the balls 10. The radial lip 172 extends radially inward and toward the inboard side, and plays a main role for preventing the lubricant from flowing out from the inside of the hub bearing 1.

The lips 174 and 176 extend from the inclined connection part 164B laterally (toward the outboard side) and radially outward. The lip 174 is an axial lip or a side lip and extends toward the flange surface 4B of the hub 4. The distal end of the axial lip 174 is in contact with the flange surface 4B or the arc surface 4C. The lip 176 is called an axial lip or an intermediate lip and extends toward the arc surface 4C, and the distal end of the intermediate lip 176 is in contact with the arc surface 4C. The lips 174 and 176 play a main role for preventing foreign matter from flowing into the hub bearing 1 from the outside. The intermediate lip 176 has a backup function that blocks foreign matter that has passed through the axial lip 174.

The rigid ring 165 has a cylindrical part 165A, an annular part 165B, a connecting part 165C, and an annular part 165D. The cylindrical part 165A is fitted into the inner peripheral surface of the end portion 8A of the outer race 8. The annular part 165B is located radially inside the cylindrical part 165A, and is oriented so as to be orthogonal to the central axis Ax of the hub bearing 1. The connecting part 165C connects the cylindrical part 165A and the annular part 165B. When the rigid ring 165 is fitted into the inner peripheral surface of the end portion 8A of the outer race 8, the cylindrical part 165A is compressed radially inward and elastically deformed by the end portion 8A. Fig. 31 shows the cylindrical part 165A in a compressed state.

The cylindrical part 165A of the rigid ring 165 and the cylindrical part 164A of the elastic ring 164 constitute a mounted part 166 that is fitted into the inner peripheral surface of the end portion 8A of the outer race 8. The connecting part 165C of the rigid ring 165 is in close contact with the cylindrical part 164A of the elastic ring 164, whereas the annular part 165B is in close contact with the annular part 164C of the elastic ring 164.

The annular part 165D is in close contact with the inclined connection part 164B of the elastic ring 164. The annular part 165D has a bent shape that is substantially homothetic to the shape of the bent shape of the inclined connecting part 164B.

In this embodiment, an annular clearance 180 is provided between the end portion 8A of the outer race 8 and the flange surface 4B of the hub 4. Through the clearance 180, foreign matter may enter the space 182 between the annular part 164C of the sealing device 20 and the flange surface 4B (the space between the surface 164E of the annular part 164C and the flange surface 4B). Conversely, the foreign matter in the space 182 can be discharged through the clearance 180.

In this embodiment, multiple water-discharging protrusions 40 protruding toward the annular part 164C of the sealing device 20 are supported on the outboard side flange 18 of the hub 4. These water-discharging protrusions 40 have the same shape and the same size, and are arranged at equiangular intervals in the circumferential direction. These water-discharging protrusions 40 protrude into the space 182.

In this embodiment, the multiple water-discharging protrusions 40 are integrally mounted on the outboard side flange 18 of the sealing device 20. In other words, the water-discharging protrusions 40 are portions of the outboard side flange 18. Therefore, the water-discharging protrusions 40 are formed of the same rigid material as that of the outboard side flange 18, for example, a metal material.

Each water-discharging protrusion 40 of this embodiment has a substantially quadrangular prism shape, specifically a substantially rhomboid prism shape, in the same manner as in the first embodiment (see Figs. 5 and 6). More specifically, each water-discharging protrusion 40 has a substantially rhombic outline defined by an inner arc surface 40A, an outer arc surface 40B, and two inclined side surfaces 40C and 40D. As shown in Fig. 31, the bottom surface 40F of the quadrangular prism of each water-discharging protrusion 40 lies on the same plane as the flange surface 4B, whereas the top surface 40E of the quadrangular prism is parallel to the flange surface 4B.

Hereinafter, Fig. 6 related to the first embodiment may be referred to. In Fig. 6, the second sealing member 26 can be read as the outboard side flange 18, and the surface 34C can be read as the flange surface 4B. Arrow R1 can be considered as the rotational direction of the hub 4 when the automotive vehicle provided with the hub bearing 1 moves forward. The arc surfaces 40A and 40B extend in arc shapes along the rotational direction R1 (see Fig. 6). In other words, each of the arc surfaces 40A and 40B overlaps a circle (not shown) concentric with the hub 4 and the outer race 8. On the other hand, the inclined side surface 40C intersects with the rotational direction R1 of the hub 4 at an acute angle, whereas the inclined side surface 40D intersects with the rotational direction R1 with an obtuse angle. The inclined side surfaces 40C and 40D are parallel to each other.

As described above, foreign matter (including water and dust) may intrude into the space 182 between the annular part 164C of the sealing device 20 and the outboard side flange 18 of the hub 4. However, multiple water-discharging protrusions 40 protrude into the space 182, and each water-discharging protrusion 40 has an inclined side surface 40C that intersects with the rotational direction R1 of the hub 4 at an acute angle (see Fig. 6). Therefore, with the rotation of the hub 4, the water in the space 182 flows in the direction opposite to the rotational direction R1 of the hub 4 along the inclined side surface 40C relative to the rotation of the hub 4. The inclined side surface 40C that intersects with the rotational direction R1 at an acute angle promotes a smooth flow of water. The water flowing in this way is quickly discharged from the space 182 through the clearance 180 (see Fig. 31). For this reason, this sealing structure has a superior ability to protect the hub bearing 1 to be sealed from the water. Furthermore, for the sealing device 20, deterioration, which is accelerated due to the presence of water (including muddy water or salt water), is reduced. Since the clearance 180 is annular, water flows out of the space 182 through a part of the clearance 180, whereas air outside the sealing device 20 flows into the space 182 through the other part of the clearance 180. The air flowing into the space 182 promotes the outflow of water from the space 182, and reduces the probability that the pressure in the space 182 becomes negative to deform the lips 174 and 176 unexpectedly.

Thus, since this sealing structure has a superior ability to discharge water by the water-discharging protrusions 40, the axial lip 174 and the intermediate lip 176 that prevent the intrusion of foreign matter are not necessary. In a case in which the axial lip 174 and the intermediate lip 176 are not provided, no torque occurs due to the axial lip 174 and the intermediate lip 176 sliding on the hub 4 when the hub 4 rotates. Therefore, the energy efficiency of the automotive vehicle can be increased.

However, in this embodiment, an axial lip 174 and an intermediate lip 176 are provided in order to increase the certainty of blocking foreign matter. Even in this case, since the ability to discharge water by the water-discharging protrusions 40 is superior, it is not necessary to increase the contact pressure of the axial lip 174 and the intermediate lip 176 against the hub 4. Therefore, it is possible to suppress or reduce the torque caused by the axial lip 174 and the intermediate lip 176 sliding on the hub 4 while improving the ability to discharge water. In a case in which the axial lip 174 and the intermediate lip 176 are provided, the water-discharging protrusions 40 are preferably located closer to the clearance 180 than the outermost axial lip 174 (located between the axial lip 174 and the clearance 180) as in this embodiment. In other words, the water-discharging protrusions 40 preferably protrude into the space 182 communicating with the atmosphere. By being arranged in this way, as described above, the air outside the sealing device 20 flows into the space 182, in which the water-discharging protrusions 40 are arranged, through the clearance 180, so that discharge of the water from the space 182 is promoted.

In this embodiment, as shown in Fig. 31, each water-discharging protrusion 40 is located at a position that does not overlap the axial lip 174 or the intermediate lip 176. Therefore, when the hub 4 rotates, the water-discharging protrusions 40 do not collide with or slide on the axial lip 174 or the intermediate lip 176, and excessive wear of the axial lip 174 and the intermediate lip 176 is suppressed.

Furthermore, each water-discharging protrusion 40 is located distant from the cylindrical part 164A and the annular part 164C of the sealing device 20. Therefore, when the hub 4 rotates, the water-discharging protrusions 40 do not collide with or slide on the sealing device 20.

In this embodiment, as shown in Fig. 31, the flange surface 4B of the hub 4 is parallel to the surface 164E of the annular part 164C of the sealing device 20, which faces the flange surface 4B. That is, the flange surface 4B on which the water-discharging protrusions 40 are formed is parallel to the surface 164E located in front of the water-discharging protrusions 40. In other words, the two surfaces that define the space 182 in which the multiple water-discharging protrusions 40 are arranged are parallel to each other. Therefore, the efficiency for discharging water by the water-discharging protrusions 40 is better than in a case in which the two surfaces are not parallel.

In this embodiment, each water-discharging protrusion 40 has a quadrangular prism shape, and the bottom surface 40F of the quadrangular prism lies on the same plane as the flange surface 4B, whereas the top surface 40E of the quadrangular prism is parallel to the flange surface 4B. Therefore, compared with an example case in which each water-discharging protrusion 40 is of a tapered shape that becomes narrower from the bottom surface toward the top, the cross-sectional area of the water-discharging protrusions (the area on a cross section in a radial direction of the sealing device 20, that is, the area on the paper surface of Fig. 31) can be increased, and the efficiency for discharging water by the water-discharging protrusions 40 is better.

In this embodiment, as can be understood from Fig. 6, the length of each water-discharging protrusion 40 in the rotational direction of the hub 4 is greater than the length of each water-discharging protrusion 40 in radial directions of the sealing device 20. In particular, each water-discharging protrusion 40 has a maximum length (the length between the apex formed by the inner arc surface 40A and the inclined side surface 40C and the apex formed by the outer arc surface 40B and the inclined side surface 40D) along the rotational direction R1 of the hub 4. Therefore, even if hard foreign matter collides with and damages the water-discharging protrusions 40, or the water-discharging protrusions 40 are worn by the water flow, the entire water-discharging protrusions 40 do not disappear in a short period of time. That is, the water-discharging protrusions 40 have a long service life.

In this embodiment, each water-discharging protrusion 40 protrudes into the space 182 between the annular part 164C of the sealing device 20 and the outboard side flange 18 of the hub 4. Therefore, as is apparent from Fig. 31, the multiple water-discharging protrusions 40 are arranged in a range within the maximum diameter of the sealing device 20. For this reason, it is not necessary to increase the size of the sealing structure, and thus, the hub bearing 1.

In this embodiment, the multiple water-discharging protrusions 40 are made of the same rigid material as that of the outboard side flange 18, for example, a metal material. Therefore, the water-discharging protrusions 40 have superior durability against the impact of hard foreign matter and superior wear resistance.

In this embodiment, the multiple water-discharging protrusions 40 are integrally mounted on the outboard side flange 18. Therefore, since the number of parts is reduced, the assembly of the sealing structure is easy.

The method for forming the water-discharging protrusions 40 may be, for example, pressing using a mold or injection molding. In this case, the water-discharging protrusions 40 may be formed simultaneously with the formation of the outboard side flange 18. However, the water-discharging protrusion 40 may be joined to the outboard side flange 18 by welding, soldering, or bonding, or the water-discharging protrusions 40 may be formed by cutting the outboard side flange 18.

Features of the first embodiment and the above-described various modifications related to the first embodiment, may be incorporated into the second embodiment as long as there is no contradiction. The features of the first embodiment and the modifications may be combined and incorporated in the second embodiment as long as there is no conflict. For example, the water-discharging protrusions 40 in the embodiment of Fig. 31 may be integrally mounted on an elastic ring (not shown) attached to the outboard side flange 18, instead of being directly mounted on the outboard side flange 18. In this case, the water-discharging protrusions 40 may be formed of an elastic material, for example, an elastomer material.

As in the modification shown in Fig. 7, instead of the water-discharging protrusions 40, water-discharging protrusions 50 having a substantially triangular or trapezoidal prism shape may be used. In Fig. 7, the second sealing member 26 can be read as the outboard side flange 18, and the surface 34C can be read as the flange surface 4B. Arrow R1 can be considered as the rotational direction of the hub 4 when the automotive vehicle provided with the hub bearing 1 moves forward, and arrow R2 can be considered as the rotational direction of the hub 4 when the automotive vehicle provided with the hub bearing 1 moves backward. In this case, the sealing structure can be used for both the left and right wheels of an automotive vehicle, and can discharge water by the water-discharging protrusions 50 when the automotive vehicle moves forward and backward. When mounting the sealing device 20 on an automotive vehicle, the operating person does not have to be aware of which wheel the sealing device is for.

The intermediate lips 176 may be omitted, or the number of axial lips including the intermediate lips 176 may be three or more.

As similar to the modification shown in Fig. 9, the water-discharging protrusions 40 may be integrally mounted on the circular annular plate 54 that is stacked on the outboard side flange 18. The circular annular plate 54, and thus, the water-discharging protrusions 40, may be formed of a metal material. However, the circular annular plate 54 and the water-discharging protrusions 40 may be formed of, for example, a resin material containing metal powder, a resin material containing ceramic powder, a resin material containing both metal powder and ceramic powder, an elastomer material containing metal powder, an elastomer material containing ceramic powder, or an elastomer material containing both metal powder and ceramic powder. Since these materials contain at least one of metal powder and ceramic powder, they have a higher hardness than that of ordinary resin materials or elastomer materials and are not easily damaged by foreign matter. In any case, the water-discharging protrusions 40 have superior durability against impact of hard foreign matter and superior wear resistance. Furthermore, the circular annular plate 54, and thus, the water-discharging protrusions 40, may be formed of a resin material or an elastomer material that does not contain metal powder or ceramic powder. The method for forming the water-discharging protrusions 40 may be, for example, pressing using a mold or injection molding. In this case, the water-discharging protrusions 40 may be formed simultaneously with the formation of the circular annular plate 54. However, the water-discharging protrusions 40 may be joined to the circular annular plate 54 by welding, soldering, or bonding, or the water-discharging protrusion 40 may be formed by cutting the circular annular plate 54. The circular annular plate 54 may be a member that can be easily separated from the outboard side flange 18, or may be joined to the outboard side flange 18.

Instead of the water-discharging protrusions 40, water-discharging protrusions 50 having a substantially triangular or trapezoidal prism shape may be used as in the modification shown in Figs. 11 to 13.

The flange surface 4B of the outboard side flange 18 does not have to be parallel to the surface 164E of the annular part 164C of the sealing device 20, which faces the flange surface 4B.

In the second embodiment, the entire sealing device 20 is located inside the end portion 8A of the outer race 8, but a part of the sealing device 20 may be located outside the end portion 8A. For example, the cylindrical part 165A of the rigid ring 165 may be located outside the end portion 8A. In this case, the end portion 8A is preferably engaged by interference fit (that is, press-fitted) into the cylindrical part 165A of the rigid ring 165.

Fig. 32 shows a sealing structure according to a modification of the second embodiment. In this modification, although not necessary, a rotational sealing member 167 that rotates together with the hub 4 is fixed around the hub 4. The rotational sealing member 167 is made of a rigid material such as metal. Although the sealing device 20 and the rotational sealing member 167 are annular, only the left parts thereof are shown in Fig. 32.

The sealing device 20 is of a composite structure having an elastic ring 168 and a rigid ring 169. The elastic ring 168 is formed of an elastic material such as an elastomer. The rigid ring 169 is made of a rigid material such as metal, and reinforces the elastic ring 168.

A part of the rigid ring 169 is embedded in the elastic ring 168 and is in close contact with the elastic ring 168. The part of the rigid ring 169 having a U-shaped cross section is engaged by interference fit (that is, is press-fitted) into the inner peripheral surface of the end portion 8A of the outer race 8.

The elastic ring 168 has an annular part 168A, an inclined connecting part 168B, and lips 172 and 174. The annular part 168A has a circular annular shape, is in contact with the end surface of the end portion 8A of the outer race 8, and expands inward in radial directions toward the outer peripheral surface 4A of the cylindrical part of the hub 4 so as to be orthogonal to the central axis Ax of the hub bearing 1. Furthermore, the annular part 168A faces the flange surface 4B of the outboard side flange 18.

The inclined connecting part 168B is located radially inside the annular part 168A. In this modification, the inclined connecting part 168B extends obliquely from the annular part 168A radially inward and toward the inboard side, and is bent so as to be orthogonal to the central axis Ax of the hub bearing 1, and extends further extends inwardly in radial directions.

The lips 172 and 174 extend from the inclined connection part 168B toward the hub 4 of the hub bearing 1. Each of the lips 172 and 174 is made of only an elastic material, and is a thin plate-like ring extending from the inclined connecting part 168B. The distal end of each of the lips 172 and 174 is in contact with the rotational sealing member 167. Whereas the sealing device 20 is attached to the stationary outer race 8, the hub 4 rotates, so that the lips 172 and 174 slide on the rotational sealing member 167 fixed to the hub 4. The lip 172 is a radial lip, that is, a grease lip, and extends radially inward and toward the inboard side. The lip 172 plays a main role to prevent the lubricant from flowing out of the hub bearing 1. The lip 174 is a dust lip that plays a main role of preventing foreign matter from flowing into the hub bearing 1 from the outside.

In this modification, an annular clearance 180 is provided between the end portion 8A of the outer race 8 and the flange surface 4B of the hub 4. Foreign matter may enter through the clearance 180 into the space 182 between the annular part 168A of the sealing device 20 and the flange surface 4B (in this modification, the space between the annular part 168A and the rotational sealing member 167). Conversely, foreign matter in the space 182 can be discharged through the clearance 180.

In this modification, multiple water-discharging protrusions 65 protruding toward the annular part 168A of the sealing device 20 are supported on the outboard side flange 18 of the hub 4. The water-discharging protrusions 65 have the same shape and the same size, and are arranged at equiangular intervals in the circumferential direction. The water-discharging protrusions 65 protrude into the space 182.

In this modification, the multiple water-discharging protrusions 65 are integrally mounted on an elastic ring 186 attached to the outboard side flange 18. The water-discharging protrusions 65 and the elastic ring 186 are made of an elastic material, for example, an elastomer material. The water-discharging protrusions 65 and the elastic ring 186 may be formed of a resin material, an elastomer material, a resin material containing at least one of metal powder and ceramic powder, or an elastomer material containing at least one of metal powder and ceramic powder. In a case in which the water-discharging protrusions 65 and the elastic ring 186 contain at least one of metal powder and ceramic powder, the water-discharging protrusions 65 and the elastic ring 186 have superior durability against the impact of hard foreign matter and have superior wear resistance.

The elastic ring 186 covers the outer edge of the rotational sealing member 167 and further covers a part of the surface of the rotational sealing member 167 on the side of the flange surface 4B. An annular seal protrusion 188 is formed on this part of the elastic ring 186. The annular seal protrusion 188 is sandwiched between the rotational sealing member 167 and the flange surface 4B, and prevents or reduces contact of water with the flange surface 4B, thereby suppressing generation of rust of the hub 4.

The water-discharging protrusions 65 of this modification may be the same as any type of the water-discharging protrusions 40, 50, 60, and 65 of the first embodiment or the modifications. For ease of understanding, in Fig. 32, the reference numerals that were used for the water-discharging protrusions 65 of Figs. 17 to 22 are used. The bottom surface 65F of each water-discharging protrusion 65 lies on the same plane as the surface of the elastic ring 186, whereas the top surface 65E is parallel to the flange surface 4B. The curved surface 65G is curved in an arc shape such that the more radially inward the positions on the curved surface 65G, the more distant from the flange surface 4B.

The sealing device 20 has an annular outer labyrinth lip 192. The outer labyrinth lip 192 protrudes from the annular part 168A of the elastic ring 168 toward the outboard side flange 18 of the hub 4, but is not in contact with the hub 4 or the rotational sealing member 167. The outer labyrinth lip 192 is aligned with the multiple water-discharging protrusions 65 in radial directions, and is located radially outside the multiple water-discharging protrusions 65.

The outer labyrinth lip 192 has a curved surface 192A such that the more radially inward the positions on the outer labyrinth lip 192, the more distant from the flange surface 4B. The curved surface 65G of each water-discharging protrusion 65 faces the curved surface 192A of the outer labyrinth lip 192 and is formed substantially parallel to the curved surface 192A. The curved surface 192A defines a narrow space 182 in which the water-discharging protrusions 65 having the curved surfaces 65G can rotate. Instead of the curved surface 65G of each water-discharging protrusion 65, an inclined surface may be provided that inclines such that the more radially inward the positions on the inclined surface, the more distant from the flange surface 4B. In this case, the outer labyrinth lip 192 may have an inclined surface such that the more radially inward the positions on the inclined surface of the outer labyrinth lip 192, the more distant from the flange surface 4B, and the inclined surface of the outer labyrinth lip 192 is substantially parallel to the inclined surface of each water-discharging protrusion 65.

As described above, foreign matter (including water and dust) may enter the space 182 between the annular part 168A of the sealing device 20 and the outboard side flange 18 of the hub 4. However, multiple water-discharging protrusions 65 protrude into the space 182, and each water-discharging protrusion 65 has an inclined side surface 65C that intersects with the rotational direction R1 of the hub 4 at an acute angle. Therefore, with the rotation of the hub 4, the water in the space 182 flows in the direction opposite to the rotational direction R1 of the hub 4 relative to the rotation of the hub 4 along the inclined side surface 65C. The inclined side surface 65C that intersects with the rotational direction R1 at an acute angle promotes a smooth flow of water. The water flowing in this way is quickly discharged from the space 182 through the clearance 180 (see Fig. 32). For this reason, the sealing structure has superior ability to protect the hub bearing 1 to be sealed from the water. Furthermore, for the sealing device 20, deterioration, which is accelerated due to the presence of water (including muddy water or salt water), is reduced. Since the clearance 180 is annular, water flows out of the space 182 through a part of the clearance 180, whereas air outside the sealing device 20 flows into the space 182 through the other part of the clearance 180. The air flowing into the space 182 promotes the outflow of water from the space 182, and reduces the probability that the pressure in the space 182 becomes negative, unexpectedly deforming the lips 174 and 176.

Thus, since this sealing structure has a superior ability to discharge water by the water-discharging protrusions 65, there is no need to increase the number of dust lips 174 that prevent foreign matter from entering or to increase the contact pressure of the lips 172 and 174 against the rotational sealing member 167. Therefore, torque resulting from sliding of the lip 172, 174 on the rotational sealing member 167 can be suppressed or reduced while enhancing the ability to discharge water.

Furthermore, each water-discharging protrusion 65 is located distant from the annular part 168A of the sealing device 20. Therefore, when the hub 4 rotates, the water-discharging protrusions 65 do not collide with, or slide on, the sealing device 20.

In this modification, the outer labyrinth lip 192 has a curved surface 192A, whereas each water-discharging protrusion 65 has a curved surface 65G, which the curved surface 65G faces. Since the outer labyrinth lip 192 and each water-discharging protrusion 65 have the curved surfaces 192Aand 65G, foreign matter is unlikely to enter the space 182 from the outside.

Moreover, the more radially outward the positions on the curved surfaces 65G of the water-discharging protrusions 65, the closer to the flange surface 4B. Accordingly, the ability to discharge water is high. This is due to the same reason as described with reference to Fig. 21 regarding the modification of the first embodiment.

Furthermore, the more radially outward positions on the curved surface 192A of the labyrinth lip 90, the closer to the flange surface 4B, and the sealing device 20 has the labyrinth lip 90. Accordingly, the ability to discharge water is high. This is due to the same reason as described with reference to Fig. 22 regarding the curved surface 66 of the modification of the first embodiment.

In this modification, the rotational sealing member 167 is fixed around the hub 4. However, the rotational sealing member 167 may be omitted and the lips 172 and 174 may be in contact with the hub 4. In this case, the multiple water-discharging protrusions 65 may be directly and integrally mounted on the outboard side flange 18 of the sealing device 20. In this case, the water-discharging protrusions 65 may be formed of the same rigid material as that of the outboard side flange 18, for example, a metal material.

### OTHER MODIFICATIONS

Although embodiments of the present invention have been described above, the foregoing description is not intended to limit the present invention. Various modifications including omission, addition, and substitution of structural elements may be made within the scope of the present invention.

For example, in the above-described embodiments, the hub 4 and the inner race 6 that are inner members are rotating members, and the outer race 8 that is an outer member is a stationary member. However, the present invention is not limited to the above-described embodiments, and can be applied to sealing multiple members that rotate relative to each other. For example, the inner members may be stationary and the outer member may rotate, or all of these members may rotate.

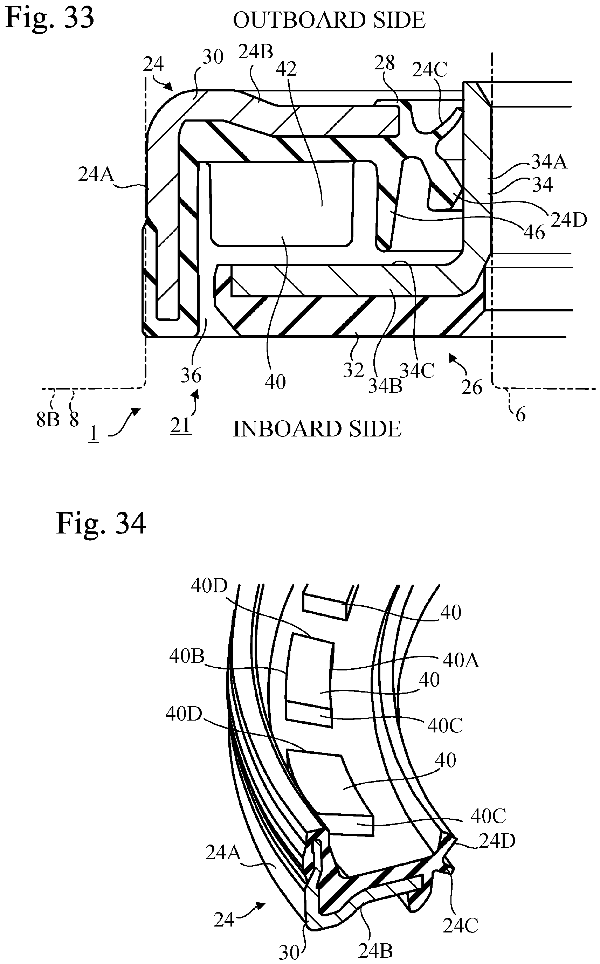

In the first embodiment or the modifications, the water-discharging protrusions 40, 50, 60, and 65 are supported by the second sealing member 26. However, as in the modification shown in Figs. 33 and 34, the water-discharging protrusions 40, 50, 60, and 65 may be supported by the first sealing member 24 and protrude toward the second sealing member 26. That is, the water-discharging protrusions 40, 55, 60, and 65 may be supported by the rotating member, or may be supported by the stationary member. In any case, the flow of water is promoted by the inclined side surfaces that intersect at an acute angle with the rotational direction of the rotating member.

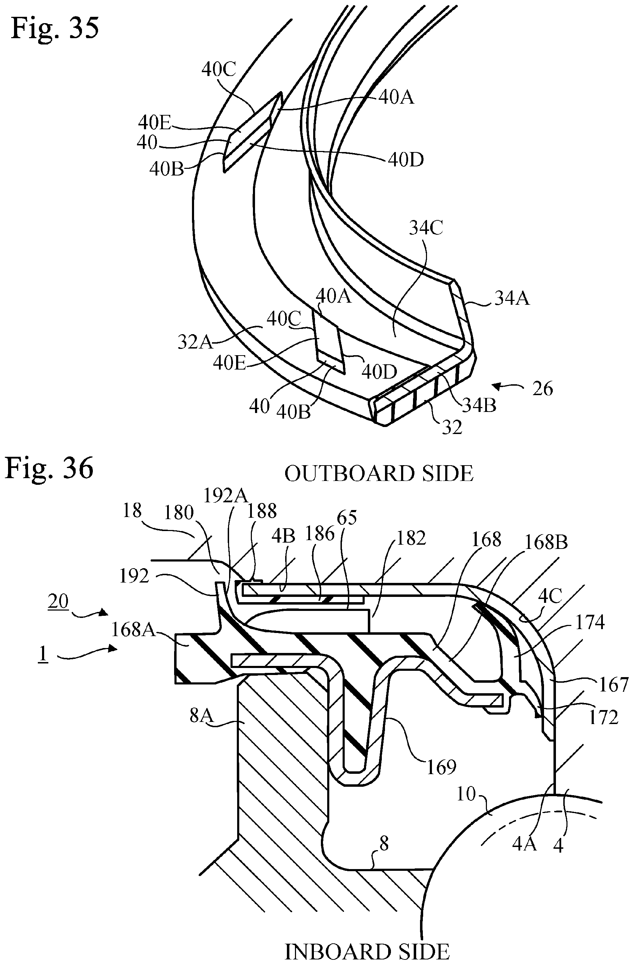

The water-discharging protrusions 40, 50, 60, and 65 may be supported by both the second sealing member 26 and the first sealing member 24 and may protrude into the space 42. In this case, as compared with the first embodiment shown in Fig. 5, the size of the water-discharging protrusions 40, 50, 60, and 65 supported by the second sealing member 26 may be reduced as in the modification shown in Fig. 35 or the number thereof may be reduced.

In the second embodiment or the modification, the water-discharging protrusions 40, 50, 60, and 65 are supported by the hub 4. However, as in the modification shown in Fig. 36, the water-discharging protrusions 40, 50, 60, and 65 may be supported by the sealing device 20 and may protrude toward the hub 4. The water-discharging protrusions 40, 50, 60, and 65 may be supported by both the hub 4 and the sealing device 20 and may protrude into the space 182. That is, the water-discharging protrusions 40, 55, 60, and 65 may be supported by the rotating member, or may be supported by the stationary member. In any case, the flow of water is promoted by the inclined side surfaces that intersect at an acute angle with the rotational direction of the rotating member.

The use of the present invention is not limited to sealing of the hub bearing 1. For example, the sealing device or the sealing structure according to the present invention may be applied to a differential gear mechanism or other power transmission mechanism of an automotive vehicle, a bearing or other support mechanism for a drive shaft of an automotive vehicle, a bearing or other support mechanism for a rotary shaft of a pump.

Although the rigid ring 30 of the sealing device 21 in the first embodiment is a single component, the rigid ring 30 may be replaced with multiple rigid rings separated from each other in radial directions. The rigid ring 165 of the sealing device 20 of the second embodiment is also a single component, but the rigid ring 165 may be replaced with multiple rigid rings separated from each other in radial directions.

Aspects of the present invention are also set out in the following numbered clauses:
Clause 1. A sealing device used for a rolling bearing including an inner member and an outer member that rotate relative to each other, the sealing device located between the inner member and the outer member for sealing a gap between the inner member and the outer member, the sealing device including:
   a first sealing member that is to be mounted on the outer member, the first sealing member including an annular part expanding radially inward toward the inner member; and
   a second sealing member that is to be mounted on the inner member, the second sealing member including a flange part expanding radially outward and facing the annular part of the first sealing member,
   multiple water-discharging protrusions being supported by at least one of the first sealing member and the second sealing member, the multiple water-discharging protrusions protruding in a space located between the annular part of the first sealing member and the flange part of the second sealing member and being arranged in a circumferential direction,
   each water-discharging protrusion including an inclined side surface intersecting at an acute angle with a rotational direction in which at least one of the inner member and the outer member rotates.
Clause 2. The sealing device according to clause 1, wherein the second sealing member further includes a cylindrical sleeve part surrounding the inner member,
   the first sealing member including a radial lip made of an elastic material extending to the sleeve part of the second sealing member and at least one axial lip made of an elastic material extending to the flange part of the second sealing member,
   the multiple water-discharging protrusions being located at locations that do not overlap the axial lip.
   According to this clause, the provision of the axial lip can increase the certainty of blocking foreign matter. In this case, since the ability to discharge water by the water-discharging protrusions is superior, it is not necessary to increase the contact pressure of the axial lop against the flange part of the second sealing member. Therefore, it is possible to suppress or reduce the torque resulting from the sliding of the axial lip on the second sealing member while improving the ability to discharge water. In addition, since the multiple water-discharging protrusions are located at locations that do not overlap the axial lip, when the inner member and the outer member rotate relative to each other, the water-discharging protrusions do not collide with or slide on the axial lip, and excessive wear of the axial lip is suppressed.
Clause 3. The sealing device according to clause 1 or 2, wherein the multiple water-discharging protrusions protruding in the space between two surfaces that are in parallel to each other.
   According to this clause, the efficiency for discharging water by the water-discharging protrusions is better than in a case in which the two surfaces are not parallel.
Clause 4. The sealing device according to clause 1 or 2, wherein the first sealing member including a curved surface or an inclined surface, the more radially inward the positions on the curved surface or the inclined surface, the more distant from the flange part of the second sealing member,
   the multiple water-discharging protrusions being supported by the second sealing member, each water-discharging protrusion including a curved surface or an inclined surface, the more radially inward the positions on the curved surface or the inclined surface, the more distant from the flange part of the second sealing member, the curved surfaces or the inclined surfaces of the water-discharging protrusions facing the curved surface or the inclined surface of the first sealing member.
   According to this clause, since the first sealing member and each of the water-discharging protrusions are provided with the curved surfaces or the inclined surfaces, foreign matter is unlikely to enter the space between the annular part and the flange part from the outside. Moreover, the more radially outward the positions on the curved surfaces or the inclined surfaces of the water-discharging protrusions, the closer to the flange part. Accordingly, the ability to discharge water is high.
Clause 5. The sealing device according to any one of clauses 1-4, wherein each of the multiple water-discharging protrusions is of a quadrangular prism shape, a bottom surface of the quadrangular prism lying on the same plane as or being parallel to a surface of the flange part facing the annular part, a top surface of the quadrangular prism being parallel to the surface of the flange part facing the annular part.
   According to this clause, compared with an example case in which each water-discharging protrusion is of a tapered shape that becomes narrower from the bottom surface toward the top, the cross-sectional area of the water-discharging protrusions (the area on a cross section in a radial direction of the sealing device) can be increased, and the efficiency for discharging water by the water-discharging protrusions is better.
Clause 6. The sealing device according to any one of clauses 1-4, wherein each of the multiple water-discharging protrusions is of a triangular prism shape or a trapezoidal prism shape having two inclined side surfaces intersecting respectively at acute angles with two rotational directions in which at least one of the inner member and the outer member rotates, a bottom surface of the triangular prism or the trapezoidal prism lying on the same plane as or being parallel to a surface of the flange part facing the annular part, a top surface of the triangular prism or the trapezoidal prism being parallel to the surface of the flange part facing the annular part.
   According to this clause, compared with an example case in which each water-discharging protrusion is of a tapered shape that becomes narrower from the bottom surface toward the top, the cross-sectional area of the water-discharging protrusions (the area on a cross section in a radial direction of the sealing device) can be increased, and the efficiency for discharging water by the water-discharging protrusions is better. In addition, according to this clause, since two inclined side surfaces intersect with the two rotational directions, respectively, one of the inclined surfaces promotes a smooth flow of water with respect to both rotational directions. Accordingly, the sealing device can be used for both rotational directions.
Clause 7. The sealing device according to any one of clauses 1-6, wherein the inclined side surface of each water-discharging protrusion is curved and concave with respect to ends of the inclined side when viewed along an axial direction of the sealing device.
Clause 8. The sealing device according to any one of clauses 1-6, wherein the inclined side surface of each water-discharging protrusion is curved and convex with respect to ends of the inclined side when viewed along an axial direction of the sealing device.
Clause 9. The sealing device according to any one of clauses 1-4, wherein each of the multiple water-discharging protrusions is of a substantially trigonal pyramid shape, the trigonal pyramid having a first inclined side surface being substantially triangular, a second inclined side surface being substantially triangular, a third inclined side surface being substantially triangular, and a bottom surface being substantially triangular, the bottom surface lying on the same plane as or being parallel to a surface of the flange part facing the annular part, the first inclined side surface and the second inclined side surface intersecting at acute angles with the rotational direction in which at least one of the inner member and the outer member rotates, a side between the third inclined side surface and the bottom surface being parallel to the rotational direction.
Clause 10. The sealing device according to any one of clauses 1-9, wherein a length of each water-discharging protrusion in the rotational direction is greater than a length of each water-discharging protrusion in radial directions of the first sealing member and the second sealing member.
According to this clause, even if hard foreign matter collides with and damages the water-discharging protrusions, or the water-discharging protrusions are worn by the water flow, the entire water-discharging protrusions do not disappear in a short period of time. That is, the water-discharging protrusions have a long service life.
Clause 11. The sealing device according to any one of clauses 1-10, wherein the multiple water-discharging protrusions are formed of a resin material or an elastomer material.
Clause 12. The sealing device according to any one of clauses 1-10, wherein the multiple water-discharging protrusions are formed of a resin material containing at least one of metal powder and ceramic powder, an elastomer material at least one of metal powder and ceramic powder, or a metal material.
   According to this clause, water-discharging protrusions have superior durability against the impact of hard foreign matter and superior wear resistance.
Clause 13. The sealing device according to any one of clauses 1-11, wherein the multiple water-discharging protrusions are integrally mounted on the second sealing member.
   According to this clause, since the number of parts is reduced, the assembly of the sealing device is facilitated.
Clause 14. The sealing device according to any one of clauses 1-13, wherein the multiple water-discharging protrusions are arranged in a range within a maximum diameter of the first sealing member.
   According to this clause, it is not necessary to increase the size of the sealing device.
Clause 15. The sealing device according to any one of clauses 1-14, wherein the space in which the multiple water-discharging protrusions protrude communicates with the atmosphere.
   In this case, the air flowing into the space promotes the outflow of water from the space.
Clause 16. A sealing structure including:
   an inner member including a cylindrical part and a flange expanding radially outward from the cylindrical part;
   an outer member rotating relative to the inner member; and
   a sealing member mounted on the outer member, the sealing member including an annular part expanding radially inward toward the cylindrical part of the inner member and facing the flange of the inner member,
   multiple water-discharging protrusions being supported by at least one of the inner member and the sealing member, the multiple water-discharging protrusions protruding in a space located between the annular part of the sealing member and the flange of the inner member and being arranged in a circumferential direction,
   each water-discharging protrusion including an inclined side surface intersecting at an acute angle with a rotational direction in which at least one of the inner member and the outer member rotates.
Clause 17. The sealing structure according to clause 16, wherein the sealing member includes:
   a radial lip made of an elastic material extending to the cylindrical part of the inner member; and
   at least one axial lip made of an elastic material extending to the flange of the inner member,
   the multiple water-discharging protrusions being located at locations that do not overlap the axial lip.
   According to this clause, the provision of the axial lip can increase the certainty of blocking foreign matter. In this case, since the ability to discharge water by the water-discharging protrusions is superior, it is not necessary to increase the contact pressure of the axial lop against the flange of the inner member. Therefore, it is possible to suppress or reduce the torque resulting from the sliding of the axial lip on the inner member while improving the ability to discharge water. In addition, since the multiple water-discharging protrusions are located at locations that do not overlap the axial lip, when the inner member and the outer member rotate relative to each other, the water-discharging protrusions do not collide with, or slide on, the axial lip, and excessive wear of the axial lip is suppressed.
Clause 18. The sealing structure according to clause 16 or 17, wherein the multiple water-discharging protrusions protruding in the space between two surfaces being in parallel to each other.
   According to this clause, the efficiency for discharging water by the water-discharging protrusions is better than in a case in which the two surfaces are not parallel.
Clause 19. The sealing structure according to any one of clause 16-18, wherein the sealing member includes an annular outer labyrinth lip protruding from the annular part toward the flange of the inner member and being not in contact with the inner member,
   the outer labyrinth lip being aligned with the multiple water-discharging protrusions in radial directions and arranged radially outside of the multiple water-discharging protrusions, the outer labyrinth lip including a curved surface or an inclined surface, the more radially inward the positions on the curved surface or the inclined surface, the more distant from the flange of the inner member,
   the multiple water-discharging protrusions being supported by the inner member, each water-discharging protrusion including a curved surface or an inclined surface, the more radially inward the positions on the curved surface or the inclined surface, the more distant from the flange of the inner member, the curved surfaces or the inclined surfaces of the water-discharging protrusions facing the curved surface or the inclined surface of the outer labyrinth lip.
   According to this clause, since the outer labyrinth lip and each of the water-discharging protrusions are provided with the curved surfaces or the inclined surfaces, foreign matter is unlikely to enter the space between the annular part and the flange from the outside. Moreover, the more radially outward the positions on the curved surfaces or the inclined surfaces of the water-discharging protrusions, the closer to the flange. Accordingly, the ability to discharge water is high.
Clause 20. The sealing structure according to any one of clauses 16-19, wherein each of the multiple water-discharging protrusions is of a quadrangular prism shape, a bottom surface of the quadrangular prism lying on the same plane as or being parallel to a surface of the flange facing the annular part, a top surface of the quadrangular prism being parallel to the surface of the flange facing the annular part.
   According to this clause, compared with an example case in which each water-discharging protrusion is of a tapered shape that becomes narrower from the bottom surface toward the top, the cross-sectional area of the water-discharging protrusions (the area on a cross section in a radial direction of the sealing device) can be increased, and the efficiency for discharging water by the water-discharging protrusions is better.
Clause 21. The sealing structure according to any one of clauses 16-19, wherein each of the multiple water-discharging protrusions is of a triangular prism shape or a trapezoidal prism shape having two inclined side surfaces intersecting respectively at acute angles with two rotational directions in which at least one of the inner member and the outer member rotates, a bottom surface of the triangular prism or the trapezoidal prism lying on the same plane as or being parallel to a surface of the flange facing the annular part, a top surface of the triangular prism or the trapezoidal prism being parallel to the surface of the flange facing the annular part.
   According to this clause, compared with an example case in which each water-discharging protrusion is of a tapered shape that becomes narrower from the bottom surface toward the top, the cross-sectional area of the water-discharging protrusions (the area on a cross section in a radial direction of the sealing member) can be increased, and the efficiency for discharging water by the water-discharging protrusions is better. In addition, according to this clause, since two inclined side surfaces intersect with the two rotational directions, respectively, one of the inclined surfaces promotes a smooth flow of water with respect to both rotational directions. Accordingly, the sealing device can be used for both rotational directions.
Clause 22. The sealing structure according to any one of clauses 16-21, wherein the inclined side surface of each water-discharging protrusion is curved and concave with respect to ends of the inclined side when viewed along an axial direction of the sealing member.
Clause 23. The sealing structure according to any one of clauses 16-21, wherein the inclined side surface of each water-discharging protrusion is curved and convex with respect to ends of the inclined side when viewed along an axial direction of the sealing member.
Clause 24. The sealing structure according to any one of clauses 16-19, wherein each of the multiple water-discharging protrusions is of a substantially trigonal pyramid shape, the trigonal pyramid having a first inclined side surface being substantially triangular, a second inclined side surface being substantially triangular, a third inclined side surface being substantially triangular, and a bottom surface being substantially triangular, the bottom surface lying on the same plane as or being parallel to a surface of the flange facing the annular part, the first inclined side surface and the second inclined side surface intersecting at acute angles with the rotational direction in which at least one of the inner member and the outer member rotates, a side between the third inclined side surface and the bottom surface being parallel to the rotational direction.
Clause 25. The sealing structure according to any one of clauses 16-24, wherein a length of each water-discharging protrusion in the rotational direction is greater than a length of each water-discharging protrusion in radial directions of the sealing member.
   According to this clause, even if hard foreign matter collides with and damages the water-discharging protrusions, or the water-discharging protrusions are worn by the water flow, the entire water-discharging protrusions do not disappear in a short period of time. That is, the water-discharging protrusions have a long service life.
Clause 26. The sealing structure according to any one of clauses 16-25, wherein the multiple water-discharging protrusions are formed of a resin material or an elastomer material.
Clause 27. The sealing structure according to any one of clauses 16-25, wherein the multiple water-discharging protrusions are formed of a resin material containing at least one of metal powder and ceramic powder, an elastomer material at least one of metal powder and ceramic powder, or a metal material.
   According to this clause, water-discharging protrusions have superior durability against the impact of hard foreign matter and superior wear resistance.
Clause 28. The sealing structure according to any one of clauses 16-27, wherein the multiple water-discharging protrusions are integrally mounted on the inner member.
   According to this clause, since the number of parts is reduced, the assembly of the sealing structure is facilitated.
Clause 29. The sealing structure according to any one of clauses 16-28, wherein the multiple water-discharging protrusions are arranged in a range within a maximum diameter of the sealing member.
   According to this clause, it is not necessary to increase the size of the sealing structure.
Clause 30. The sealing structure according to any one of clauses 16-29, wherein the space in which the multiple water-discharging protrusions protrude communicates with the atmosphere.

### REFERENCE SYMBOLS

- 1:: Hub Bearing
- 4:: Hub (Inner Member)
- 4A:: Outer Peripheral Surface of Cylindrical Part
- 4B:: Flange Surface
- 6:: Inner Race (Inner Member)
- 8:: Outer Race (Outer Member)
- 8A:: End Portion
- 8B:: End Portion
- 18:: Outboard Side Flange
- 20:: Sealing Device (Sealing Member)
- 21:: Sealing Device
- 24:: First Sealing Member
- 24A:: Cylindrical Part
- 24B:: Annular Part
- 24C:: Radial Lip
- 24D, 24F:: Axial Lip
- 26:: Second Sealing Member
- 28:: Elastic Ring
- 30:: Rigid Ring
- 32:: Elastic Ring
- 34:: Rigid Ring
- 34A:: Sleeve Part
- 34B:: Flange Part
- 40, 50, 60, 65:: Water-Discharging Protrusion
- 40C, 50C, 50D, 65C:: Inclined Side Surface
- 40E, 50E:: Top Surface
- 40F, 50F:: Bottom Surface
- 42, 46, 56:: Space
- 60A:: First Inclined Side Surface
- 60B:: Second Inclined Side Surface
- 60C:: Third Inclined Side Surface
- 60D:: Bottom Surface
- 65G:: Curved Surface
- 66:: Curved Surface
- 68:: Inclined Surface
- 69:: Inclined Surface
- 164, 168:: Elastic Ring
- 164C, 168A:: Annular Part
- 165, 169:: Rigid Ring
- 165A:: Cylindrical Part
- 165B:: Annular Part
- 165C:: Connecting Part
- 165D:: Annular Part
- 172:: Radial Lip
- 174:: Axial Lip
- 176:: Intermediate Lip (Axial Lip)
- 182:: Space
- 192:: Outer Labyrinth Lip
- 192A:: Curved Surface

## Claims

1. A sealing device used for a rolling bearing, comprising an inner member and an outer member that rotate relative to each other, the sealing device located between the inner member and the outer member for sealing a gap between the inner member and the outer member, the sealing device comprising:
a first sealing member that is to be mounted on the outer member, the first sealing member comprising an annular part expanding radially inward toward the inner member; and
a second sealing member that is to be mounted on the inner member, the second sealing member comprising a flange part expanding radially outward and facing the annular part of the first sealing member,
multiple water-discharging protrusions being supported by at least one of the first sealing member and the second sealing member, the multiple water-discharging protrusions protruding in a space located between the annular part of the first sealing member and the flange part of the second sealing member and being arranged in a circumferential direction,
each water-discharging protrusion comprising an inclined side surface intersecting at an acute angle with a rotational direction in which at least one of the inner member and the outer member rotates.

2. The sealing device according to claim 1, wherein the second sealing member further comprises a cylindrical sleeve part surrounding the inner member,
the first sealing member comprising a radial lip made of an elastic material extending to the sleeve part of the second sealing member and at least one axial lip made of an elastic material extending to the flange part of the second sealing member,
the multiple water-discharging protrusions being located at locations that do not overlap the axial lip.

3. The sealing device according to claim 1 or 2, wherein the multiple water-discharging protrusions protruding in the space between two surfaces that are in parallel to each other.

4. The sealing device according to claim 1 or 2, wherein the first sealing member comprising a curved surface or an inclined surface, the more radially inward the positions on the curved surface or the inclined surface, the more distant from the flange part of the second sealing member,
the multiple water-discharging protrusions being supported by the second sealing member, each water-discharging protrusion comprising a curved surface or an inclined surface, the more radially inward the positions on the curved surface or the inclined surface, the more distant from the flange part of the second sealing member, the curved surfaces or the inclined surfaces of the water-discharging protrusions facing the curved surface or the inclined surface of the first sealing member.

5. The sealing device according to any one of claims 1-4, wherein each of the multiple water-discharging protrusions is of a quadrangular prism shape, a bottom surface of the quadrangular prism lying on the same plane as or being parallel to a surface of the flange part facing the annular part, a top surface of the quadrangular prism being parallel to the surface of the flange part facing the annular part.

6. The sealing device according to any one of claims 1-4, wherein each of the multiple water-discharging protrusions is of a triangular prism shape or a trapezoidal prism shape having two inclined side surfaces intersecting respectively at acute angles with two rotational directions in which at least one of the inner member and the outer member rotates, a bottom surface of the triangular prism or the trapezoidal prism lying on the same plane as or being parallel to a surface of the flange part facing the annular part, a top surface of the triangular prism or the trapezoidal prism being parallel to the surface of the flange part facing the annular part.

7. The sealing device according to any one of claims 1-4, wherein each of the multiple water-discharging protrusions is of a substantially trigonal pyramid shape, the trigonal pyramid having a first inclined side surface being substantially triangular, a second inclined side surface being substantially triangular, a third inclined side surface being substantially triangular, and a bottom surface being substantially triangular, the bottom surface lying on the same plane as or being parallel to a surface of the flange part facing the annular part, the first inclined side surface and the second inclined side surface intersecting at acute angles with the rotational direction in which at least one of the inner member and the outer member rotates, a side between the third inclined side surface and the bottom surface being parallel to the rotational direction.

8. The sealing device according to any one of claims 1-7, wherein a length of each water-discharging protrusion in the rotational direction is greater than a length of each water-discharging protrusion in radial directions of the first sealing member and the second sealing member.

9. The sealing device according to any one of claims 1-8, wherein the multiple water-discharging protrusions are integrally mounted on the second sealing member.

10. The sealing device according to any one of claims 1-9, wherein the multiple water-discharging protrusions are arranged in a range within a maximum diameter of the first sealing member.

11. The sealing device according to any one of claims 1-10, wherein the space in which the multiple water-discharging protrusions protrude communicates with the atmosphere.

12. A sealing structure comprising:
an inner member comprising a cylindrical part and a flange expanding radially outward from the cylindrical part;
an outer member rotating relative to the inner member; and
a sealing member mounted on the outer member, the sealing member comprising an annular part expanding radially inward toward the cylindrical part of the inner member and facing the flange of the inner member,
multiple water-discharging protrusions being supported by at least one of the inner member and the sealing member, the multiple water-discharging protrusions protruding in a space located between the annular part of the sealing member and the flange of the inner member and being arranged in a circumferential direction,
each water-discharging protrusion comprising an inclined side surface intersecting at an acute angle with a rotational direction in which at least one of the inner member and the outer member rotates.
